# EUROPÄISCHE PATENTSCHRIFT

(11) **EP 2 588 338 B1**
(45) Veröffentlichungstag und Bekanntmachung des Hinweises auf die Patenterteilung: **12.08.2015**
(21) Anmeldenummer: 11740831.0
(22) Anmeldetag: 29.06.2011
(51) Int. Cl.: B60K 7/00, H02K 9/19, F16H 1/32, F16H 3/64, B60K 17/04, B60L 7/14, B60L 7/26, B60L 11/18

(54) **ANTRIEBSSYSTEM FÜR EIN ELEKTROFAHRZEUG**
DRIVE SYSTEM FOR AN ELECTRIC VEHICLE
SYSTÈME D'ENTRAÎNEMENT POUR UN VÉHICULE ELECTRIQUE

(30) Priorität: 10.05.2011 DE 102011050252; 29.06.2010 DE 102010025470
(43) Veröffentlichungstag der Anmeldung: 08.05.2013
(73) Patentinhaber: Schalber, Richard, 87541 Bad Hindelang (DE)
(72) Erfinder: Schalber, Richard, 87541 Bad Hindelang (DE)
(74) Vertreter: Winter, Brandl, Fürniss, Hübner, Röss, Kaiser, Polte - Partnerschaft mbB
(86) Internationale Anmeldenummer: PCT/EP2011/003216
(87) Internationale Veröffentlichungsnummer: WO 2012/000665

(56) Entgegenhaltungen:
- EP-A1- 1 733 912
- EP-A1- 1 916 444
- EP-A1- 2 218 604
- EP-A2- 1 736 389
- DE-U1- 8 810 135
- DE-U1- 9 111 129
- DE-U1- 9 318 634
- JP-A- 2005 237 176
- JP-A- 2009 190 578
- US-A- 5 224 563
- US-A- 5 818 134
- US-A1- 2006 070 778

## Beschreibung

Die Erfindung betrifft ein Antriebssystem eines Elektrofahrzeugs gemäß dem Oberbegriff des Patentanspruchs 1.

In den letzten Jahren gehen auch große Automobilhersteller dazu über, als Alternative zu herkömmlichen Kraftfahrzeugen mit Verbrennungsmotoren Elektrofahrzeuge zu entwickeln. Häufig werden dabei bei vorhandenen Fahrzeugmodellen anstelle des Verbrennungsmotors ein Elektromotor mit den entsprechenden Akkumulatoren eingebaut. Da diese Fahrzeuge für den Verbrennungsmotor konzipiert sind, sind sie weder im Hinblick auf die Integration des Elektromotors und der dafür erforderlichen, sehr voluminösen Batterie noch im Hinblick auf die Gewichtsverteilung, die sich aufgrund des hohen Batteriegewichtes von Elektrofahrzeugen grundsätzlich von der Gewichtsverteilung bei Verbrennungsmotoren unterscheidet, optimiert. Die verwendeten Batterien sind dabei üblicher Weise - ähnlich wie bei Verbrennungsmotoren - fest montiert und werden an Ladestationen geladen, wobei die Ladezeit mehrere Stunden beträgt und somit ein kurzfristiges Aufladen nicht möglich ist. Ein weiterer Schwachpunkt besteht darin, dass die herkömmlichen Batterien aufgrund ihrer geringen Kapazität nur vergleichsweise geringe Fahrzeugreichweiten ermöglichen.

Bei diesen Elektrofahrzeugen werden überwiegend Umrichter geführte Permanentmagnet erregte Synchronmaschinen favorisiert, die zur Kommutierung keine mechanischen Kontaktbürsten benötigen. Dieser Umrichter arbeitet im motorischen Betrieb als 3-Phasen-Wechselrichter, während er im generatorischen Betrieb bei der Rekuperation als Gleichrichter wirkt. Die Auslegung der Synchronmaschine erfolgt dabei im Hinblick auf die optimale Effizienz im motorischen Betrieb, sodass die in den Akkumulatoren gespeicherte elektrische Energie effizient in Antriebsenergie für das Fahrzeug umgesetzt werden kann.

Die Better Place GmbH beschreibt unter www.betterplace.com ein Konzept für Elektrofahrzeuge, bei dem der Verbraucher lediglich ein Elektrofahrzeug ohne Batterien kauft und seitens eines Betreibers Wechselbatterien angeboten werden. Diese Batterien werden in Wechselstationen montiert und können entweder an Ladestationen aufgeladen werden (siehe US D608,731 S) oder aber in Wechselstationen ausgewechselt werden, wobei dieser Wechsel ähnlich lange dauern soll, wie das Betanken eines herkömmlichen, mit einem Verbrennungsmotor betriebenen Fahrzeugs. Diese Batterien setzen einen besonderen Fahrzeugaufbau voraus, bei dem im Unterboden ein Aufnahmeraum für die Batterie mit entsprechenden Verriegelungs- und elektrischen Kontaktierungselementen vorgesehen sein muss. Die Batterie wird dann über ein Wechselsystem mit Hubtisch aus dem Fahrzeug entnommen und eine "frische" aufgeladene Batterie zugeführt.

Auf den ersten Blick erscheint dieses Konzept einen gewissen Fortschritt gegenüber den eingangs beschriebenen herkömmlichen Lösungen darzustellen, da die Investitionskosten für die Batterien vom Betreiber getragen werden und dann lediglich über eine Art Nutzungsgebühr oder den Strompreis an den Verbraucher weiter gegeben werden. Problematisch ist jedoch, dass diese Batterie lediglich für einen besonders vorbereiteten Fahrzeugtyp vorgesehen ist und dass aufgrund der einheitlichen Ausgestaltung der Batterie wenige Möglichkeiten zum Anpassen an unterschiedliche Motorenleistungen bestehen. Des Weiteren sind erhebliche Investitionskosten für die Wechselstation erforderlich, da aufgrund des hohen Batteriegewichtes (etwa 500 kg) entsprechend aufwendige Hebewerkzeuge und Lagervorrichtungen bereitgestellt werden müssen.

Bei den in der Presse und Politik als vorbildlich dargestellten Hybridfahrzeugen sind ein Verbrennungsmotor und ein Elektromotor mit entsprechend voluminösem Akkumulator kombiniert. In der Gesamtenergiebilanz ist ein derartiges Hybridfahrzeug jedoch nicht konkurrenzfähig, da beide Systeme in einem Fahrzeug integriert werden müssen und der Energieaufwand zur Herstellung dieses Fahrzeugs nicht durch einen nennenswerten Minderverbrauch kompensiert werden kann. Der Verbrauch derartiger Hybridfahrzeuge ist nur unwesentlich geringer als derjenige verbrauchsoptimierter Verbrennungsmotoren.

In der US 7,521,814 B2 ist ein Antriebssystem eines Elektrofahrzeugs offenbart, bei dem jedem Rad des Fahrzeugs ein Elektromotor zugeordnet ist. Die Stromversorgung der Motoren erfolgt über einen allen Motoren zugeordneten Generator, der bei der offenbarten Lösung mit zwei Wicklungen ausgeführt ist, die für unterschiedliche Spannungen ausgelegt sind. Eine Wicklung ist für den Hochvoltbereich zur Energieversorgung der Antriebsmotoren vorgesehen, während eine Niedervolt-Wicklung anderen elektrischen Verbrauchern des Fahrzeugs zugeordnet ist.

Nachteilig bei dieser Lösung ist, dass der zentrale Generator einen erheblichen Bauraum erfordert und des Weiteren dessen Aufbau komplex ist.

In der US 5, 818, 134 ist ein gattungsbildendes Antriebsystem beschrieben.

In der US 4,223,255 ist eine elektrische Maschine eines Antriebssystems gezeigt, die als Radnabenmaschine ausgeführt ist und die sowohl als Motor als auch als Generator betrieben werden kann, sodass beim regenerativen Bremsen über die elektrische Maschine die Fahrzeugbatterie geladen werden kann.

Ein Getriebe zur Bestimmung der Abtriebsdrehzahl ist bei dieser Lösung nicht vorgesehen.

Die EP 1 702 781 A2 offenbart ein Antriebssystem eines Fahrzeugs, bei dem ein Generator und ein Elektromotor koaxial zueinander angeordnet sind und über ein zwischen diesen angeordnetes Planetengetriebe mechanisch mit der Kurbelwelle eines Verbrennungsmotors verbunden sind. Abtriebsseitig ist ein weiteres Getriebe vorgesehen, um die Abtriebsdrehzahl der Motor-/Generatoreinheit (elektrische Maschine) auf die gewünschte Raddrehzahl zu reduzieren.

Wie eingangs erläutert, ist der vorrichtungstechnische Aufbau zur Realisierung eines derartigen Hybridantriebs mit Verbrennungsmotor und elektrischer Maschine sowie zwei Getriebesätzen äußerst hoch, sodass in der Gesamtbilanz der energetische Vorteil eines derartigen Hybridantriebs gegenüber einem konventionellen Antrieb minimal ist.

Dem gegenüber liegt der Erfindung die Aufgabe zugrunde, ein Antriebssystem für ein Elektrofahrzeug zu schaffen, das sich durch einen kompakten Aufbau und gute Anpassungsfähigkeit an unterschiedliche Fahrzeugtypen auszeichnet.

Diese Aufgabe wird durch ein Antriebssystem mit den Merkmalen des Patentanspruchs 1 gelöst.

Vorteilhafte Weiterbildungen der Erfindung sind Gegenstand der Unteransprüche.

Das erfindungsgemäße Antriebssystem eines Elektrofahrzeugs hat ein Antriebsmodul, das zumindest einem Rad zugeordnet ist und im Fahrbetrieb als Motor zum Antreiben des Rades und bei der Rekuperation als Generator zum Aufladen von Energiespeichern ausgelegt ist. Erfindungsgemäß ist dieses Antriebsmodul mit einem Antriebsmotor und einem Generator ausgeführt, die im Hinblick auf die jeweilige Aufgabenstellung (Antrieb, Rückspeisung während der Rekuperation) optimiert sind und die auf einer gemeinsamen Achse angeordnet sind. Die mechanische Anbindung dieses Antriebsmoduls an das anzutreibende Rad oder die anzutreibende Achse erfolgt über ein Getriebe, das ebenfalls koaxial zum Motor, Generator angeordnet ist, sodass das gesamte Antriebsmodul mit Antriebsmotor, Generator und Getriebe als sehr kompakte Baueinheit bereitgestellt werden kann.

Diese koaxiale Anordnung von Motor und Generator ermöglicht einen sehr kompakten Aufbau, wobei die jeweilige Elektromaschine im Hinblick auf die von ihr zu erfüllende Aufgabenstellung (Motor, Generator) in optimaler Weise ausgelegt ist. Die Ansteuerung der jeweiligen Einheit erfolgt über das Motormanagement in Abhängigkeit vom Fahrzustand.

Bei einem bevorzugten Ausführungsbeispiel der Erfindung ist der Generator mit einer Generatorrotor und einem Generatorstator und der Antriebsmotor mit einer Motorrotor und einem Motorstator ausgeführt, die koaxial zueinander angeordnet sind.

Erfindungsgemäß wird es bevorzugt, wenn die eine Generatorwicklung hochohmig und die eine Motorwicklung niederohmig ausgebildet ist.

Das Getriebe kann beispielsweise als Zykloidgetriebe oder als Planetengetriebe ausgeführt sein. Bei der Verwendung des Planetengetriebes ist der Aufbau des Antriebssystems besonders kompakt, wenn der Stator und der Rotor des Motors/ Generators das Getriebe zumindest abschnittsweise umgreifen.

Bei einer Variante der Erfindung bildet der Stator ein vorzugsweise zylindrisches Gehäuse, in dem der Rotor aufgenommen ist, der seinerseits das Getriebe umgreift.

Die Kühlung und Schmierung des Antriebssystems lässt sich auf besonders einfache Weise realisieren, wenn der Rotor eine Pumpe antreibt, diese ist vorzugsweise als in den Rotor integrierte Flügelzellenpumpe ausgeführt.

Bei der Verwendung eines Planetengetriebes können zwei Planetengetriebeeinheiten im Kraftfluss hintereinander liegend angeordnet sein, wobei zumindest eine der Einheiten mit variablem Übersetzungsverhältnis ausgeführt ist.

Dabei kann ein Sonnenrad einer Planetengetriebeeinheit mit einem Planetenträger der anderen Planeteneinheit verbunden sein.

Erfindungsgemäß wird es bevorzugt, wenn eine Abtriebs- oder Gelenkwelle des Antriebssystems mit dem Planetenträger der abtriebsseitigen Planeteneinheit verbunden ist.

Zur Veränderung des Übersetzungsverhältnisses kann in einem Planetengehäuse zumindest ein Schaltring verschiebbar geführt sein, der beispielsweise je nach Schiebeposition einen Planetenträger einer Planetengetriebeeinheit mit einem Planetengehäuse oder ein Hohlrad der Planetengetriebeeinheit und einen Planetenträger einer Planetengetriebeeinheit und ein Planetengehäuse miteinander verbindet.

Bei einem Ausführungsbeispiel der Erfindung ist das Planetengetriebe mit zwei Schaltringen ausgeführt, über die beispielsweise ein 3-Gang-Getriebe realisierbar ist. Dabei können die Schaltringe so ausgebildet sein, dass über einen Schaltring ein Planetenradträger wahlweise mit einem Planetengehäuse oder mit einem Hohlrad, verbindbar ist, während über einem weiteren Schaltring das Hohlrad mit einem Sonnenrad einer weiteren Planetengetriebeeinheit oder mit einem Planetenradträger der erstgenannten Planetengetriebeeinheit verbindbar ist. Die Geometrie der Schaltung ist dabei so gewählt, dass in den einzelnen Schaltpositionen jeweils nur ein Schaltring in Wirkeingriff mit den genannten Komponenten gelangt.

Das Planetengetriebe kann als 2-Gang- oder 3-Gang-Getriebe ausgeführt sein, wobei bei vielen Anwendungen ein 2-Gang-Getriebe ausreichen dürfte. Über den ersten Schaltring können beispielsweise Bauelemente der ersten Planetengetriebeeinheit in geeigneter Kombination miteinander oder mit einem gehäusefesten Bereich verbunden werden, der aber seinerseits rotieren kann. Der zweite Schaltring dient beispielsweise zur Wirkverbindung der ersten Planetengetriebeeinheit mit der zweiten Planetengetriebeeinheit.

Der Schaltring wird vorzugsweise mit einer Innen- und einer Außenverzahnung ausgeführt, die mit den vorgenannten Komponenten in Verzahnungseingriff bringbar ist.

Erfindungsgemäß wird es bevorzugt, wenn das Antriebsmodul wassergekühlt ist, sodass es im optimalen Temperaturbereich gehalten werden kann.

Bei einem Ausführungsbeispiel der Erfindung ist dieses Antriebsmodul mit einem Positionssensor zur mittelbaren oder unmittelbaren Erfassung der Winkelposition des angetriebenen Rades oder der angetriebenen Räder ausgeführt, sodass die Ansteuerung des Motors in Abhängigkeit von der Radposition erfolgen kann.

Die Ansteuerung des Antriebsmoduls erfolgt über eine Steuereinheit, die einen Motioncontroller zur Vorgabe von Stellgrößen für einen Servocontroller des jeweiligen Antriebsmoduls hat. Dieser Servocontroller hat dann die Aufgabe, die vom Motioncontroller berechneten Vorgaben einzuhalten, bis neue Stellgrößen übergeben werden.

Erfindungsgemäß ist jedem Antriebsmodul des Antriebsmotors ein eigener Servocontroller zugeordnet.

Die Anmelderin behält sich vor, auf die Steuereinheit einen eigenen Hauptanspruch zu richten, der nicht auf die koaxiale Anordnung von Motor und Generator beschränkt ist.

Bei einem Ausführungsbeispiel der Erfindung ist der Motioncontroller mit mehreren Fuzzyreglern zur Berechnung der Stellgrößen für den Servocontroller, beispielsweise einer Traktion, einer Radanordnung, einer Drehzahlkorrektur, eines Powermanagements für Motor/Generator in Abhängigkeit von Leitgrößen wie dem Lenkradeinschlag und der Geschwindigkeit ausgeführt.

Das Antriebssystem kann mit Sensoren zur Erfassung der Fahrzeugneigung, der Geschwindigkeitsvorgabe und/oder des Lenkradeinschlags ausgeführt sein.

Das Umschalten vom motorischen in generatorischen Betrieb kann in Abhängigkeit vom Signal des Sensors zur Erfassung der Fahrzeugneigung erfolgen, da über diesen ein Gefälle der Fahrstrecke erfasst und bei Überschreiten eines Grenzwertes vom Motorbetrieb auf Generatorbetrieb umgeschaltet werden kann (Segeln).

Erfindungsgemäß wird es bevorzugt, wenn zumindest jedem Rad einer Fahrzeugachse, vorzugsweise jedoch allen Rädern eines Fahrzeugs jeweils ein Antriebsmodul der vorbeschriebenen Bauweise zugeordnet ist. Wie bereits erwähnt, ist dabei jedem Antriebsmodul ein Servocontroller zugeordnet.

Das erfindungsgemäße Konzept ist nicht auf herkömmliche Lösungen mit Akkumulatoren beschränkt, sondern kann in Verbindung mit beliebigen Energiespeichern, beispielsweise auch Brennstoffzellen oder dergleichen verwendet werden.

Bei einem bevorzugten Ausführungsbeispiel der Erfindung wird ein Akkumulator verwendet, der - je nach erforderlicher Kapazität - aus einer Vielzahl von verschalteten Blöcken und Zellen besteht, die in einem geschlossenen Gehäuse angeordnet sind. Der Grundaufbau eines derartigen Akkumulators ist in der älteren Patentanmeldung DE 10 2010 012 420.6 erläutert. Die Verwendung eines geschlossenen Gehäuses hat den Vorteil, dass der Akku gegenüber äußeren Einflüssen geschützt ist. Die Thermostatisierung des Akkus erfolgt vorzugsweise über einen Wärmetauscher.

Bevorzugte Ausführungsbeispiele der Erfindung werden im Folgenden anhand schematischer Zeichnungen näher erläutert. Es zeigen:
Figur 1 eine Schemadarstellung des erfindungsgemäßen Antriebssystems bei einem Allradfahrzeug;
Figur 2 den Aufbau eines Antriebsmoduls eines Rades;
Figur 3 ein Grundkonzept für eine Ansteuerung eines Antriebsmoduls gemäß Figur 2;
Figur 4 eine detaillierte Darstellung des Grundkonzepts gemäß Figur 3;
Figur 5 ein Diagramm zur Verdeutlichung der Verteilung der Rechneraufgaben des Antriebssystems gemäß Figur 4;
Figur 6 Regelstrecken des Antriebssystems gemäß Figur 4; und
Figur 7 eine Übersicht über wesentliche Steuer- und Regelungsgrößen;.
Figur 8 eine dreidimensionale Ansicht eines alternativen Antriebsmoduls;
Figur 9 einen Längsschnitt durch den Antriebsmodul aus Figur 8;
Figur 10 eine Einzelansicht eines Stator-Gehäuses des Antriebsmoduls gemäß Figur 9 mit angesetzter Kühlmittelpumpe;
Figur 11 eine dreidimensionale Ansicht eines Rotors des Antriebsmoduls gemäß Figur 9;
Figur 12 eine Prinzipdarstellung eines Planetengetriebes des Antriebsmoduls;
Figur 13 eine Einzeldarstellung einer Getriebewelle mit zwei Sonnenrädern;
Figur 14 ein Planetengetriebe des Antriebsmoduls in einer ersten Schaltposition;
Figur 15 das Planetengetriebe in einer zweiten Schaltposition;
Figur 16 ein Ausführungsbeispiel eines Antriebssystems mit einem modifizierten Planetengetriebe mit zwei Schaltringen;
Figur 17 das Planetengetriebe aus Figur 16 in einem ersten Gang;
Figur 18 eine dreidimensionale Teildarstellung des Planetengetriebes aus Figur 17;
Figur 19 das Planetengetriebe aus Figur 16 in einem zweiten Gang;
Figur 20 eine dreidimensionale Teildarstellung des Planetengetriebes gemäß Figur 19 und
Figur 21 eine Darstellung des Planetengetriebes gemäß Figur 16 im dritten Gang.

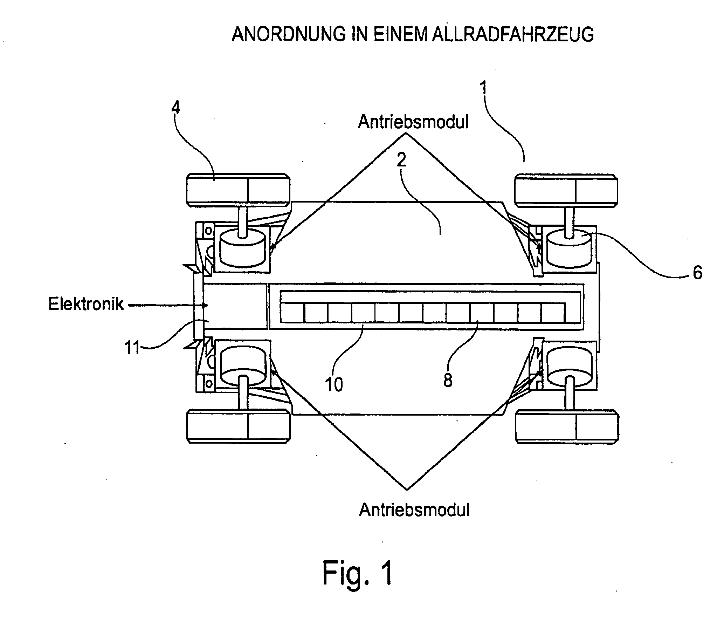

Figur 1 zeigt ein stark vereinfachtes Grundschema eines mit dem erfindunggemäßen Antriebssystem ausgeführten Allradfahrzeugs 1, mit einer Bodengruppe 2, deren Grundaufbau in der oben genannten älteren Patentanmeldung erläutert ist. Bei dieser sehr variabel einsetzbaren Bodengruppe 2 ist jedem Rad 4 ein Shocktower zugeordnet, an dem jeweils ein Radträger mit integriertem Bremssattel sowie die Radführungselemente ausgeführt sind. Im Bereich jedes Shocktowers ist des Weiteren ein erfindungsgemäßes Antriebsmodul 6 angeordnet, über das jeweils ein zugeordnetes Rad 4 angetrieben werden kann. Die Ansteuerung der vier Antriebsmodule 6 erfolgt über eine Steuereinheit 11 in Abhängigkeit von Fahrzuständen des Fahrzeugs und von den vom Fahrer vorgegebenen Leitgrößen, wie beispielsweise Lenkradeinschlag, Sollgeschwindigkeit ("Gaspedalstellung"), Bodenbeschaffenheit etc. Die elektrische Energie wird über einen Akkumulator 8 bereitgestellt, der aus einer Vielzahl von Zellen besteht und der in einen Tunnel 10 der Bodengruppe 2 eingeschoben wird. Das Wechseln dieses Akkumulators 8 kann - wie in der älteren Anmeldung beschrieben - vom Heck des Fahrzeugs her (rechts in Figur 1) erfolgen, wobei der aus mehreren Akkumulatorblöcken bestehende Akku zum Laden entnommen und ein aufgeladener Akku zugeführt werden kann. Im Hinblick auf weitere Einzelheiten dieses neuartigen Systems wird auf die genannte ältere Anmeldung verwiesen.

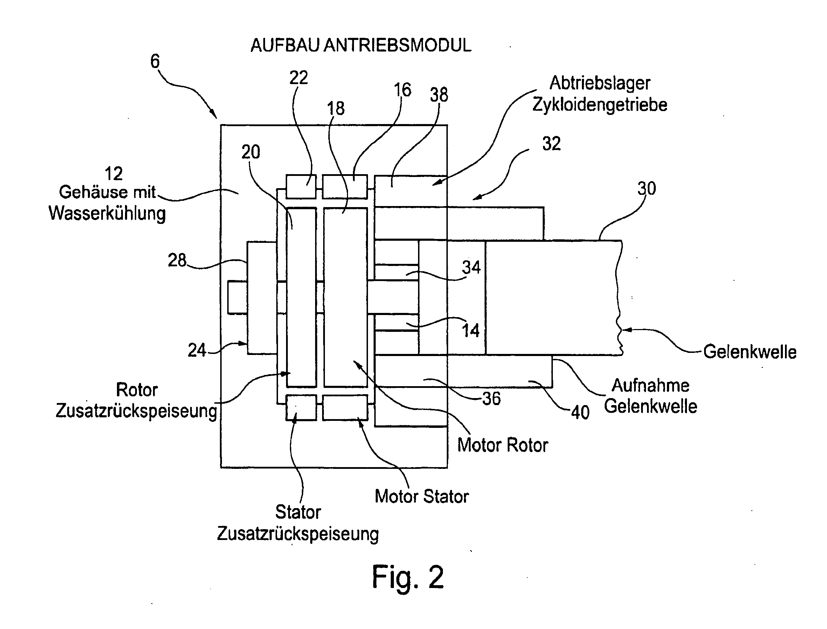

Figur 2 zeigt ein stark schematisiertes Blockschaubild eines Antriebsmoduls 6 zum Direktantrieb eines Rads 4. Dieses Antriebsmodul 6 hat einen High-Torque-Motor 12, dessen Grundaufbau beispielsweise von Antriebsmotoren für die NC-Achsen von Werkzeugmaschinen bekannt ist. Derartige Motoren 12 erlauben das Verfahren von Achsen mit äußerst hohen Beschleunigungen und Geschwindigkeiten, wobei die übertragbaren Drehmomente in Bereichen liegen, die für den Antrieb oder das Abbremsen eines Fahrzeugrades ohne Probleme ausreichen. Der High-Torque-Motor 12 hat einen auf einer Welle 14 angeordneten Rotor 16 mit einer Rotorwicklung, die in Wirkverbindung mit einem Stator 18 steht, der den Rotor 16 in an sich bekannter Weise umgreift. Auf der gleichen Welle 14 ist ein Generator-Rotor 20 angeordnet, dem ein gehäusefester Generator-Stator 22 eines Generators 24 zugeordnet ist.

Der High-Torque-Motor 12 und der Generator 24 sind in einem wassergekühlten Gehäuse 26 aufgenommen, sodass die Temperatur der elektrischen Maschine (Motor 12, Generator 24) im optimalen Betriebsbereich gehalten werden kann.

Die Lagerung der Welle 14 ist in Figur 2 mit dem Bezugszeichen 28 gekennzeichnet. Die Übertragung des vom Motor 12 erzeugten Antriebsmomentes auf das zugeordnete Rad 4 erfolgt über eine Gelenkwelle 30, die eine Relativbewegung des Rades 4 mit Bezug zum Chassis ausgleicht. Diese Gelenkwelle 30 ist über ein Zykloidgetriebe 32 mit dem Motor 12 und dem Generator 24 verbunden, sodass die vergleichsweise hohe Drehzahl der Welle 14 in eine vergleichsweise geringere Raddrehzahl mit großem Drehmoment übersetzt wird. Der Aufbau derartiger Zykloidgetriebe ist hinlänglich bekannt, sodass nur die wesentlichen Bauelemente beschrieben werden und im Übrigen auf den Stand der Technik verwiesen wird. Demgemäß hat ein Zykloidgetriebe 32 eine Highspeed-Eingangswelle, die im vorliegenden Fall durch die Welle 14 gebildet ist. Diese ist exzentrisch mit Bezug zur Achse der Gelenkwelle 30 gelagert. Die Welle 14 treibt eine Zykloidenscheibe 34 an, die sich an einem feststehenden Außenring abwälzt, der mit bolzenartigen Vorsprüngen in Umfangsausnehmungen der Zykloidenscheibe eingreift. Die Übersetzung ist dabei durch die Anzahl der Umfangsausnehmungen und bolzenartigen Vorsprüngen der Zykloidenscheibe bzw. des Außenrings vorgegeben, sodass entsprechend dieses Übersetzungsverhältnisses die Rotation der Welle 14 in eine gegenläufige Drehung der Zykloidenscheibe mit geringerer Drehzahl umgesetzt wird. Diese Zykloidenscheibe 34 ist drehfest verbunden mit einem Abtriebsflansch 36, der über ein Abtriebslager 38 im Gehäuse 12 gelagert ist. Der Abtriebsflansch 36 ist mit einer Aufnahme 40 zur drehfesten Verbindung mit der Gelenkwelle 30 ausgeführt, sodass das Antriebsmoment des High-Torque-Motors 12 über das Zykloidgetriebe 32 auf das zugeordnete Rad 4 übertragen wird. In umgekehrter Weise wird bei der Rekuperation, beispielsweise beim Bremsen ein Antriebsmoment vom Rad auf die Welle 14 und damit auf den Generator 24 übertragen, sodass die kinetische Energie über letzteren in elektrische Energie gewandelt und im zugeordneten Energiespeicher, beispielsweise dem genannten Akkumulator 8 gespeichert werden kann.

Diese Einheit ist äußerst kompakt aufgebaut und kann aufgrund des geringen benötigten Bauraums unmittelbar im Bereich des Rades 4, vorzugsweise im Bereich des Shocktower angeordnet werden. Das Antriebsmodul 6 ermöglicht es, Fahrzeuge mit unterschiedlichen Antriebskonzepten - Vorderradantrieb, Hinterradantrieb, Allradantrieb oder auch bei Zwei- oder Dreirädern zum Antrieb eines Rades auszuführen, wobei im Prinzip stets die gleiche Einheit verwendet werden kann.

Ein weiterer Vorteil der Erfindung besteht darin, dass die Generatorwicklung relativ hochohmig und die Antriebswicklung im Vergleich dazu niederohmig ausgelegt ist, sodass im regenerativen Betrieb eine effektive Rückspeisung mit einem Wirkungsgrad bis zu 90 Prozent und im motorischen Betrieb ein sehr hohes Drehmoment mit großem Wirkungsgrad erzielt werden können. Im Prinzip wird bei dem erfindungsgemäßen Antriebsmodul 6 ein im Hinblick auf die Rückspeisung optimierter Generator 24 und ein im Hinblick auf den Antrieb optimierter Motor 12 verwendet - im Gegensatz dazu wird bei herkömmlichen Systemen eine elektrische Maschine verwendet, deren Auslegung einen Kompromiss für den generatorischen und motorischen Betrieb darstellt.

Das Motormanagement des erfindungsgemäßen Antriebssystems ist so ausgelegt, dass abhängig vom Betriebszustand des Fahrzeugs und von den vom Fahrer vorgegebenen Leitgrößen der High-Torque-Motor 12 und der Generator 24 in geeigneter Weise angesteuert werden.

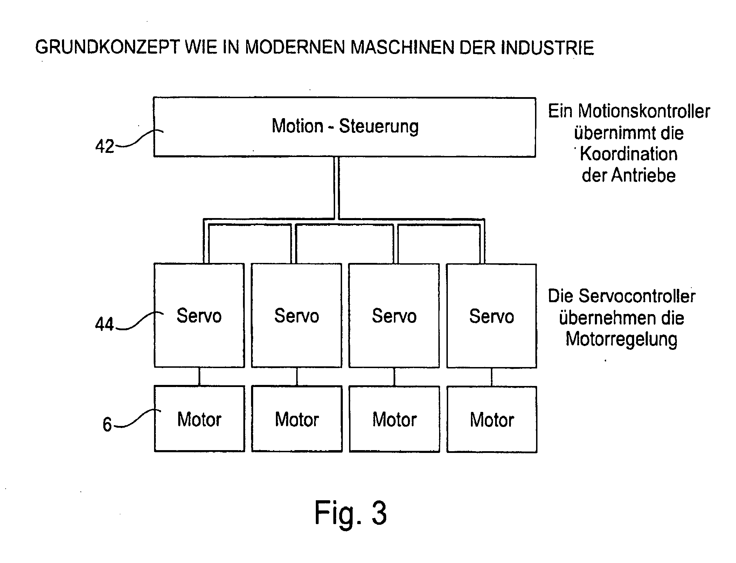

Figur 3 zeigt ein Blockschema der erfindungsgemäßen Motorsteuerung. Diese weist im Prinzip einen Motioncontroller 42 auf, wie er im Prinzip bereits aus der Steuerung von Werkzeugmaschinen bekannt ist. Der Motioncontroller 42 übernimmt die Koordination der dem jeweiligen Rad 4 zugeordneten Antriebsmodule 6. Dabei ist jedem Antriebsmodul 6 ein Servocontroller 44 zugeordnet ist, über den in Abhängigkeit von den Leitgrößen und vom erfassten Fahrzustand des Fahrzeugs das jeweilige Antriebsmodul 6 geregelt wird, sodass die Vorgaben exakt eingehalten werden. Mit anderen Worten gesagt, über den Motioncontroller 42 werden - wie im Folgenden noch näher ausgeführt - aus den vorgegebenen Leitgrößen Stellgrößen für die Servocontroller 44 berechnet und an diesen übergeben, wobei dessen Aufgabe darin besteht diese Stellgrößen jeweils einzuregeln.

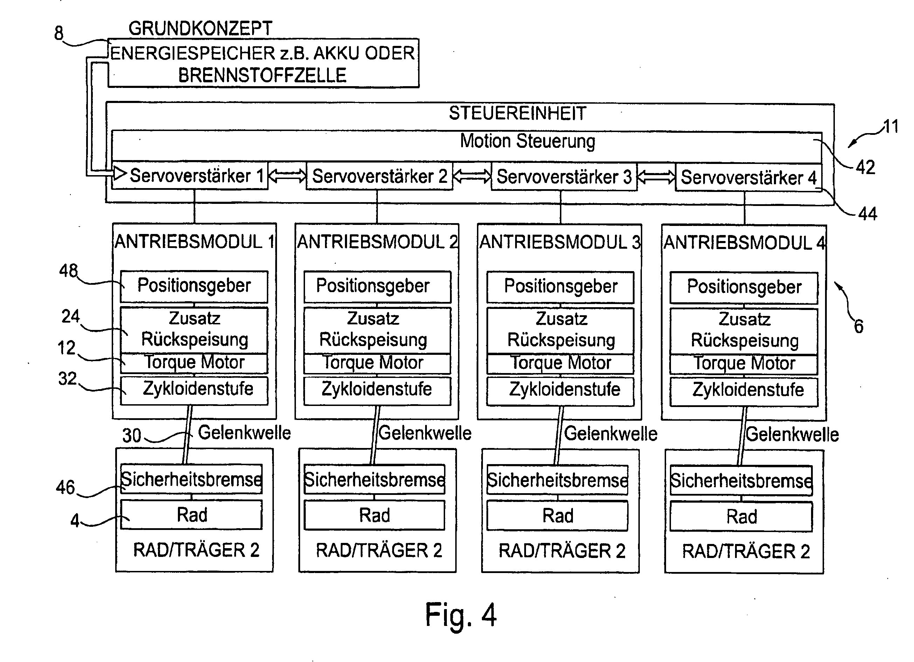

Figur 4 zeigt weitere Einzelheiten des erfindungsgemäßen Antriebssystems bei dem die jeweils einem Rad 4 zugeordneten Antriebsmodule 6 über die zuvor beschriebene Steuereinheit 11 angesteuert werden. Demgemäß werden - wie eben erläutert - die vorgegebenen Leitgrößen, beispielsweise der "Lenkradeinschlag" und die Leitgröße "Geschwindigkeit", die aus der Geschwindigkeitsvorgabe, der aktuellen Geschwindigkeit und/oder den über den Neigungssensor erfassten Neigungswinkel bestimmt werden in Stellgrößen für die Servocontroller 44 umgewandelt, wobei die Energieversorgung über den Akkumulator 8 erfolgt. In Abhängigkeit von diesen für jedes Rad 4 individuellen Stellgrößen werden dann die Antriebsmodule 6 (Antriebsmodule der vier Räder) angesteuert.

Wie anhand Figur 2 erläutert, bestehen diese Antriebsmodule 6 jeweils im Prinzip aus dem Generator 24, dem High-Torque-Motor 12 und dem Zykloidgetriebe 32, dessen Ausgang über die Gelenkwelle 30 mit dem Rad 4 verbunden ist. Jedes Rad 4 ist mit einer Sicherheitsbremse 46, beispielsweise mit einem in einem Radträger integrierten Bremssattel (siehe ältere Anmeldung) ausgeführt. Prinzipiell kann das Abbremsen des jeweiligen Rades 4 auch alleine über den Generator 24 erfolgen - das von derartigen Generatoren erzeugbare Bremsmoment liegt im Bereich von herkömmlichen Höchstleistungsbremsen. Aus Sicherheitsgründen wird jedoch zusätzlich die Sicherheitbremse 46 vorgesehen, die bei einem Ausfall der Steuereinheit 11 ein sicheres Abbremsen des Fahrzeugs ermöglicht.

Die Berechnung der Stellgrößen aus den Leitgrößen erfolgt unter Anderem auch in Abhängigkeit vom Signal eines Positionsgebers 48, über den die Dreh- und Winkelposition des jeweiligen Rads 6 erfassbar ist und zum Motioncontroller gemeldet wird. Über diesen Positionsgeber 48 kann beispielsweise ein Schlupf des Rads 6 oder der tatsächliche Lenkeinschlag erfasst werden.

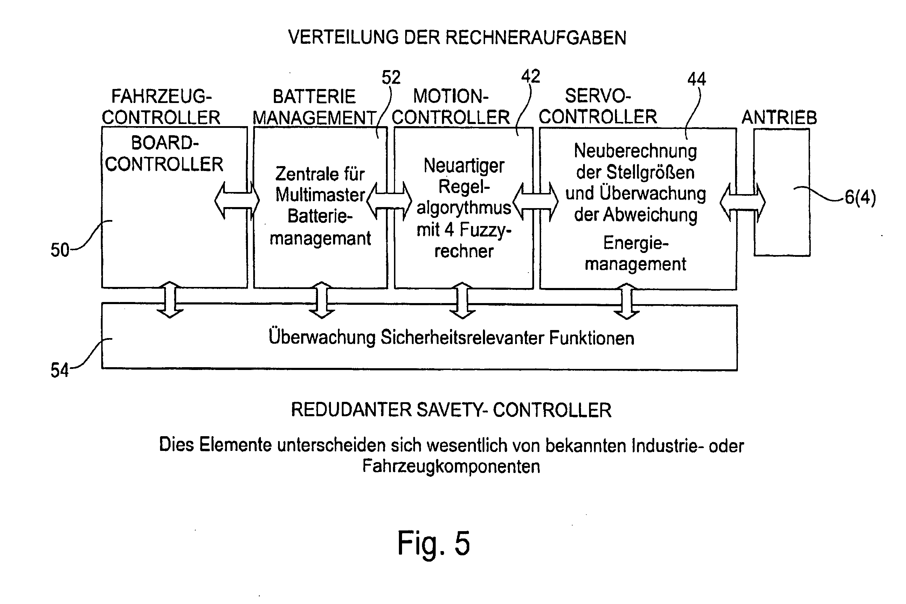

Figur 5 zeigt ein Blockschaubild, aus dem sich die Verteilung der Rechneraufgaben des erfindungsgemäßen Antriebskonzeptes erschließt.

Demgemäß hat das Boardmanagement des Fahrzeugs einen Fahrzeugcontroller 50, über den beispielsweise das sogenannte "Batteriemanagement" 52 erfolgt. D.h., über den Fahrzeugcontroller und das Batteriemanagement 52 wird das Aufladen und Entladen des Akkumulators 8 in Abhängigkeit von den Betriebszuständen gesteuert. Das Batteriemanagement 52 bildet eine Zentrale für ein Multimaster-Batteriemanagement.

Wie bereits erläutert, werden über den Motioncontroller 42 aus den vorgegebenen Leitgrößen Stellgrößen für die einzelnen Servocontroller 44 berechnet und die Antriebsmodule 6 in entsprechender Weise angesteuert. Dabei werden über die genannten Controller sämtliche sicherheitsrelevanten Funktionen geprüft, erfasst und mit den Vorgaben verglichen und bei Abweichungen korrigiert. Die Überwachung der sicherheitsrelevanten Funktionen erfolgt beim erfindungsgemäßen Antriebssystem über einen Safetycontroller 54.

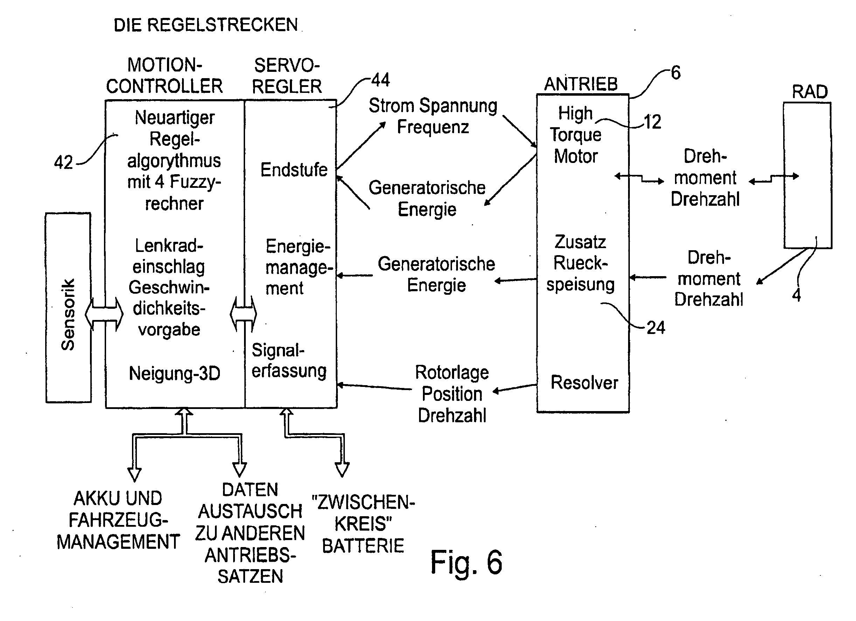

Figur 6 zeigt ein Blockschaubild der Regelstrecken des Antriebssystems. Bei dem dargestellten Ausführungsbeispiel ist der Motioncontroller 42 im weitesten Sinn durch vier Fuzzyrechner gebildet, die jeweils für eine Stellgröße des Antriebsmoduls 6 zuständig sind. So ist ein Fuzzyrechner zur Berechnung der Fuzzygröße "Traktion" zuständig, bei der aus der Differenz des über dem Motioncontroller 42 vorgegebenen Drehmomentes und der Lastverteilung an die vier Räder 6 zu dem jeweiligen aktuellen Drehmoment die Traktion oder der Schlupf erfasst und ein entsprechendes Signal an den Servocontroller 44 abgegeben wird. Ein weiterer Fuzzyrechner rechnet die Fuzzygröße "Radkorrektur", die sich aus der aktuellen Radanordnung, erfasst über den Positionsgeber ergibt. Der dritte Fuzzyrechner berechnet die Fuzzygröße "Drehzahlkorrektur", die sich aus einem Vergleich der Solldrehzahl mit der Istdrehzahl des Motors 12 ergibt. Der vierte Fuzzyrechner berechnet schließlich die Fuzzygröße "Power", die das Powermanagement zum Aufladen und Entladen des Akkumulators 8 vorgibt.

Diese Fuzzygrößen werden über PID-Funktionalität der Fuzzyrechner in Abhängigkeit von den vorgegebenen Leitgrößen, im vorliegenden Fall dem Lenkradeinschlag und der Leitgröße Geschwindigkeit (berechnet aus Geschwindigkeitsvorgabe, aktueller Geschwindigkeit und Neigungswinkel) durch Integration berechnet und als Stellgrößen an die Servocontroller 44 übergeben. Über diese praktisch eine Endstufe ausbildenden Servocontroller 44 wird dann der jeweilige High-Torque-Motor 12 durch Vorgabe von Strom, Spannung und/oder Frequenz angesteuert und entsprechend das zugeordnete Rad 4 mit einem entsprechenden Drehmoment beaufschlagt bzw. mit einer vorgegebenen Drehzahl angetrieben. Wie in Figur 6 angedeutet, kann auch in Abhängigkeit von den Betriebszuständen des Fahrzeugs, beispielsweise vom Drehmoment und von der Drehzahl des Rades 4 eine Rückspeisung über den Generator 24 erfolgen, sodass die erzeugte generatorische Energie über den Servoregler 44 und den Motioncontroller 42 zum Aufladen des Akkumulators 8 zurückgespeist wird.

Über den Servoregler 44 erfolgt zur Regelung des motorischen und generatorischen Betriebs auch eine Signalerfassung, bei der - wie vorstehend ausgeführt - die Drehzahl, die Drehposition des jeweiligen Rotors/Rads etc. mittels eines Resolvers erfasst wird.

Selbstverständlich können über den gemeinsamen Motioncontroller 42 in entsprechender Weise auch die Servoregler 44 der anderen Räder 6 in entsprechender Weise angesteuert werden.

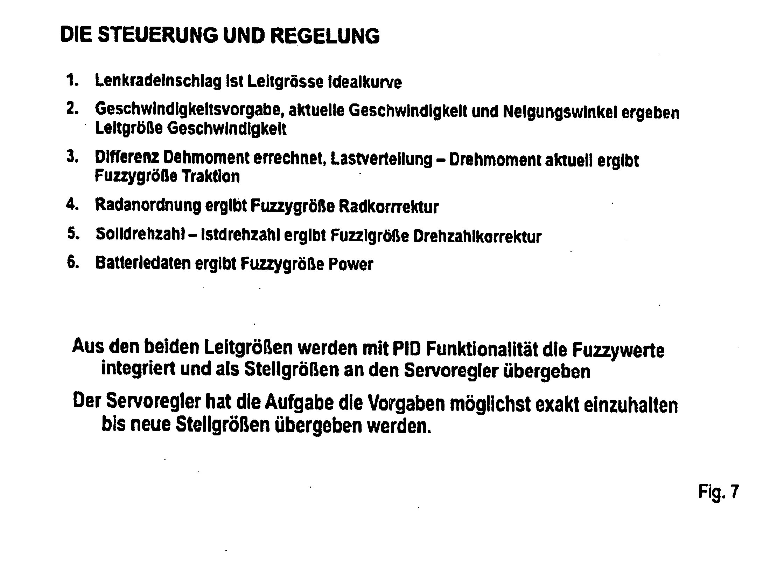

Figur 7 zeigt nochmals die wesentlichen Elemente der Steuerung/Regelung des erfindungsgemäßen Antriebssystems. Demgemäß bildet der Lenkradeinschlag die Leitgröße "Ideallinie". Der Motioncontroller 42 führt somit in Abhängigkeit vom Lenkradeinschlag eine Bahnberechnung vor, die diese Ideallinie vorgibt.

Dem Motioncontroller 42 wird des Weiteren die genannte Leitgröße "Geschwindigkeit" vorgegeben, wobei über die vier Fuzzyrechner die Fuzzygrößen "Traktion", "Radkorrektur", "Drehzahlkorrektur" und "Power" berechnet werden. Diese Stellgrößen werden dann an die Servocontroller 44 übergeben, deren Aufgabe im Prinzip darin besteht, diese Stellgrößen solange möglichst exakt einzuhalten, bis neue Stellgrößen übergeben werden.

Durch diese Steuer-/Regelstrategie kann das Fahrverhalten praktisch für jede Situation programmiert und entsprechend gesteuert werden. Durch einfachen Eingriff in die Software kann das Fahrverhalten auch optimal an ein Fahrzeug oder dessen Beladezustand angepasst werden. Das erfindungsgemäße Antriebssystem ermöglicht einen modularen Aufbau für einen Frontantrieb, einen Heckantrieb und einen Allradantrieb, wobei im Prinzip stets die gleichen Komponenten für das Antriebsmodul 6 verwendet werden können. Dieses Antriebssystem ist weitestgehend unabhängig von der Art des Energiespeichers und auch bei zukünftigen Akkutechniken mit höherer Energiedichte anwendbar.

Aufgrund der eigenen Generatorwicklung ist im generatorischen Betrieb eine hohe Rückspeisung bis zu 90 Prozent ermöglicht.

Bei dem erfindungsgemäßen Antriebssystem kann über den Motioncontroller 42 und entsprechende Ansteuerung der Servocontroller 44 ein herkömmliches Differential, ein ABS-System, ein ASR-System oder dergleichen ersetzt werden, ohne dass es zusätzlicher Bauelemente bedarf. Das Antriebssystem kann im Hinblick auf das jeweilige Fahrverhalten programmiert werden, sodass eine optimale Anpassung an den Fahrzeugtyp und an die Fahrbahnbeschaffenheit ermöglicht ist.

Aufgrund des verwendeten Safetycontrollers 54 und der ständigen Regelung/ Steuerung der Antriebskomponenten kann das Fahrzeug mit hoher Sicherheit betrieben werden. Dieses Antriebssystem ist auch geeignet für ein Leitsystem, Stadtfahrzeuge, Sonderfahrzeuge im militärischen oder technischen Bereich. Wobei ein Allradfahrzeug durch entsprechende Ansteuerung der einzelnen Räder eine lenkungsunabhängige Steuerung ermöglicht ist und somit auf kleinstem Raum gewendet werden kann.

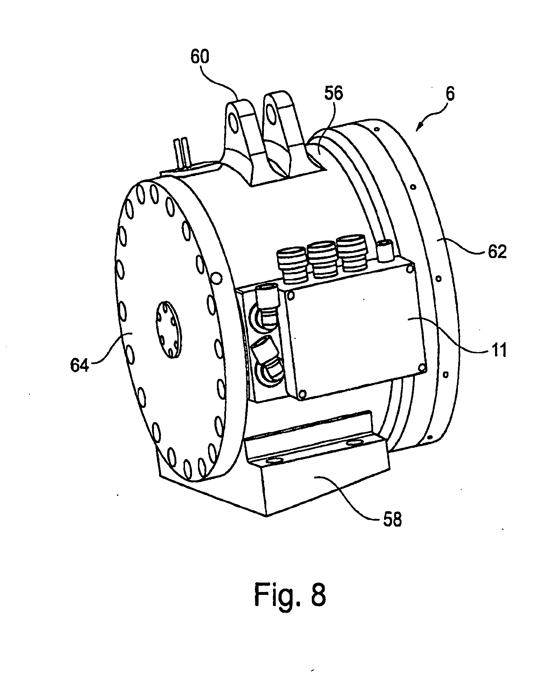

Anhand der Figuren 8 bis 15 wird ein Ausführungsbeispiel eines Antriebsmoduls 6 erläutert, bei dem das Getriebe als Planetengetriebe ausgeführt ist. Bei dem beschriebenen Ausführungsbeispiel ist der Einfachheit halber die eigentliche Motor- Generatoreinheit mit einem gemeinsamen Rotor und Stator dargestellt. Selbstverständlich kann dieses Ausführungsbeispiel auch - wie eingangs erläutert - mit jeweils getrennten Motor-/Generatorwicklungen ausgeführt werden.

Figur 8 zeigt eine dreidimensionale Darstellung des zweiten Ausführungsbeispiels eines Antriebsmoduls 6 für das erfindungsgemäße Antriebssystem. Das dargestellte Antriebsmodul 6 hat ein in etwa zylindrisches Gehäuse, das - wie im Folgenden näher erläutert - auch ein Stator-Gehäuse 56 ausbildet. Am Außenumfang des Stator-Gehäuses 56 ist ein Befestigungsflansch 58 zur Befestigung des Antriebsmoduls 6 am Fahrzeugrahmen oder dergleichen und eine Konsole 60 zum Anlenken einer Drehmomentabstützung ausgebildet. Stirnseitig ist das Stator-Gehäuse 56 durch zwei Lagerschilde 62, 64 abgeschlossen, wobei das in Figur 8 rechte Lagerschild 62 von einer Abtriebswelle durchsetzt ist, die beispielsweise drehfest mit der Gelenkwelle 30 oder einer sonstigen Antriebswelle für das zugeordnete Rad 4 verbunden ist. Am Außenumfang des Stator-Gehäuses 56 ist die Steuereinheit 11 mit dem Motioncontroller 42 und einer Steuereinheit zum Betätigen eines im Folgenden noch näher beschriebenen Schaltmoduls eines Getriebes befestigt. In der Steuereinheit 11 ist des Weiteren noch ein Wechselrichter zum Umformen einer Gleichspannung in eine Wechselspannung aufgenommen.

In das Stator-Gehäuse 56 münden des Weiteren Kühl-/Schmiermittelanschlüsse 66 zur Kühlung und Schmierung des Antriebsmoduls 6 ein.

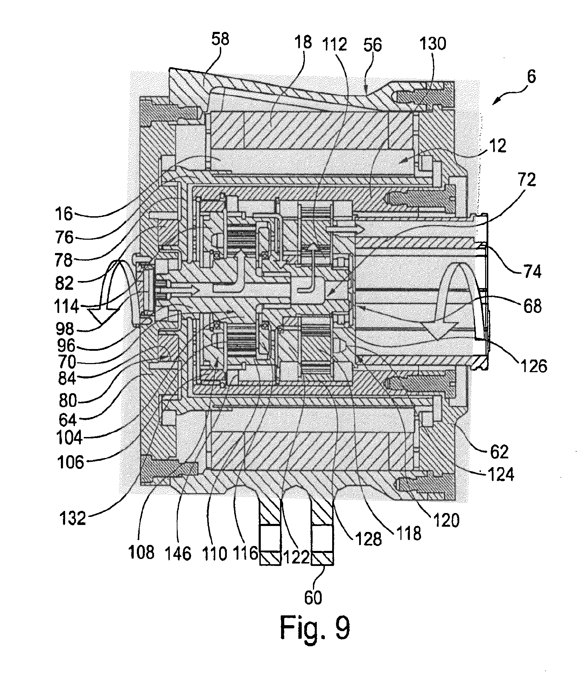

Figur 9 zeigt einen Längsschnitt durch das Antriebsmodul 6 gemäß Figur 8. Man erkennt das Stator-Gehäuse 56 mit dem Befestigungsflansch 58 und der Konsole 60 sowie die stirnseitig angesetzten Lagerschilde 64, 66.

Eine Besonderheit der in Figur 9 dargestellten Variante besteht darin, dass der im Stator-Gehäuse 56 aufgenommene High-Torque-Motor 12 und ein Getriebe koaxial zueinander angeordnet sind, wobei der Motor 12 das Getriebe umgreift. Dieses ist, wie später noch detaillierter ausgelegt wird, als Planetengetriebe 68 mit zwei in Wirkverbindung stehenden Planetengetriebeeinheiten 70, 72 ausgeführt ist. Die abtriebsseitige Planetengetriebeeinheit 72 treibt eine Abtriebswelle 74 an, die ihrerseits drehfest mit einer Gelenkwelle oder dergleichen verbunden sein kann und das abtriebsseitige Lagerschild 62 durchsetzt.

Wie erwähnt, kann der Motor 12 als Synchronmotor oder Asynchronmotor ausgeführt sein, bei der beschriebenen Variante ist ein Synchronmotor vorgesehen. Dieser hat einen im Stator-Gehäuse 56 befestigten Stator 18, der ringzylinderförmig ausgebildet ist und mit einem Luftspalt einen Rotor 16 umgreift. Der Stator 18 ist mit einer in Figur 9 lediglich angedeuteten Statorwicklung versehen, während bei dem dargestellten Ausführungsbeispiel der Rotor 16 ein Magnetsystem beinhaltet. Der prinzipielle Aufbau derartiger Synchron- oder Asynchronmotoren ist bekannt, sodass auf den Stand der Technik, beispielsweise auf den im Internet unter der Marke "Vectopower" beschriebenen Motor verwiesen werden kann. Der Rotor 16 ist drehfest mit einem topfförmigen Rotor-Gehäuse 76 verbunden, dessen Boden 78 in etwa parallel zum Lagerschild 64 verläuft und dessen Umfangswandung das Planetengetriebe 68 sowie einen Teil der Abtriebswelle 74 umgreift. In den Boden 78 ist eine Kühlmittelpumpe 80 integriert, deren Flügel 82 radial verschiebbar im Boden 78 aufgenommen sind und an einem Hubring 84 anliegen, der im Lagerschild 64 ausgebildet ist. In bekannter Weise ist die Achse des Hubrings 84 exzentrisch zur Drehachse der Flügel 82 ausgebildet, sodass bei der Rotation sich entsprechend vergrößernde oder verkleinernde Druckräume ausbilden. Durch diese Flügelzellenpumpe wird Kühl-/Schmiermittel, beispielsweise Öl, in einem Kreislauf gefördert, sodass beispielsweise bei hohen Drehmomenten und langsamen Drehzahlen eine hinreichende Kühlung und Schmierung gewährleistet ist.

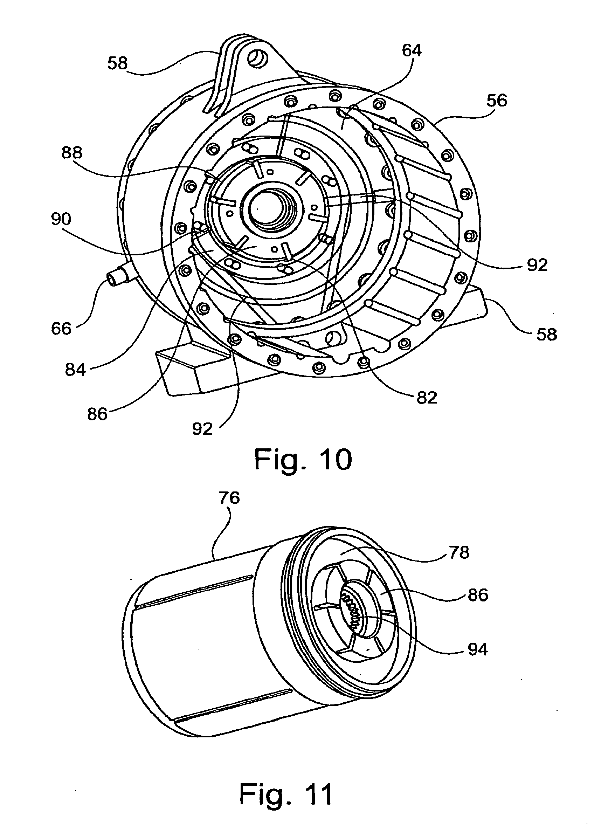

Figur 10 zeigt eine dreidimensionale Einzeldarstellung des Stator-Gehäuses 56 bei abgenommenen Lagerschild 62. Das andere Lagerschild 64 mit dem an dieses angesetzten Hubring 58 ist sichtbar. Des Weiteren eingezeichnet ist ein Pumpenrotor 86, der an den Boden 78 angesetzt ist oder in diesen integriert ist. Die Flügel 82 stehen in Radialrichtung aus dem Pumpenrotor 86 heraus und bilden mit dem Innenumfang des Hubrings 84 die sich vergrößernden bzw. verkleinernden Druckräume 88, die von jeweils zwei Flügeln 82 umfangsseitig begrenzt sind. Die Kühlmittelzufuhr erfolgt über einen Einlasskanal 90. Das druckbeaufschlagte Kühlmittel wird über Kühlmittelkanäle 92 zu den thermisch beanspruchten Bereichen des Antriebsmoduls 6 gefördert und strömt dann zum Einlass zurück.

Figur 11 zeigt eine vereinfachte Darstellung des Rotor-Gehäuses 76, das im Stator-Gehäuse 56 drehbar gelagert ist und an seinem in Figur 11 sichtbaren Boden 78 den Pumpenrotor 86 trägt, in den radiale Schlitze zur Aufnahme der Flügel 82 ausgebildet sind.

Im Boden 78 ist koaxial zum Pumpenrotor 86 eine Innenverzahnung 94 ausgebildet, über die das Rotorgehäuse 76 und damit der Rotor 12 drehfest mit einer antriebsseitigen Getriebewelle 96 der antriebsseitigen Planetengetriebeeinheit 70 verbunden ist. Gemäß Figur 9 ist der linke Endabschnitt der antriebsseitigen Getriebewelle 96 über ein Wellenlager 98 im Lagerschild 94 gelagert. Die antriebsseitige Getriebewelle 96 steht, wie im Folgenden noch näher erläutert wird, in Wirkverbindung mit der Abtriebswelle 74 der abtriebsseitigen Planetengetriebeeinheit 72.

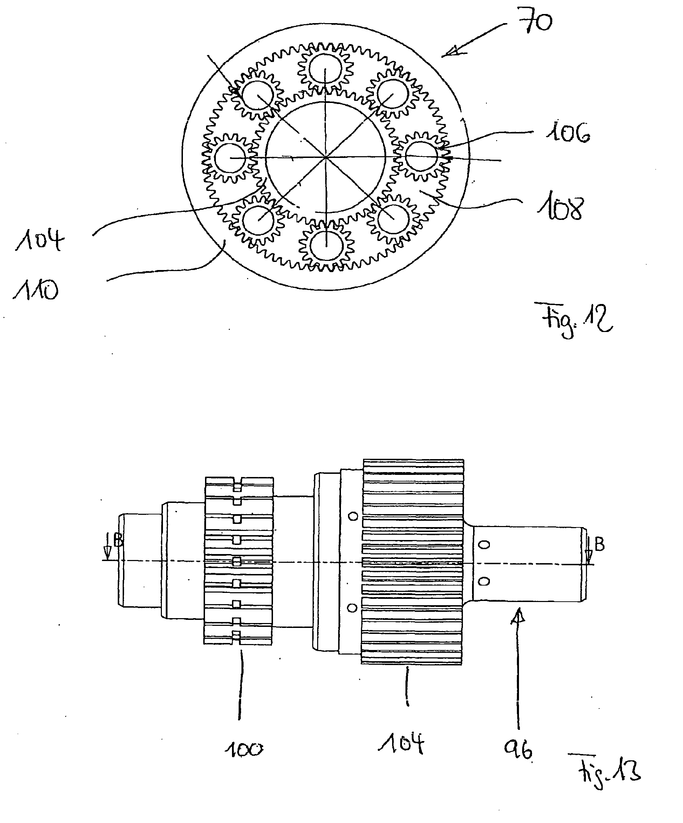

Der prinzipielle Aufbau der Planetengetriebeeinheiten 70, 72 ist in Figur 12 dargestellt. Die folgenden Erläuterungen erfolgen anhand der Planetengetriebeeinheit 70, die Planetengetriebeeinheit 72 hat einen weitestgehend entsprechenden prinzipiellen Aufbau. Demgemäß hat die antriebsseitige Planetengetriebeeinheit 70 ein Sonnenrad 104, das im vorliegenden Fall als Außenverzahnung an der antriebsseitigen Getriebewelle 96 ausgebildet ist. Die Außenverzahnung des Sonnenrads 104 kämmt in bekannter Weise mit einer Vielzahl von Planetenrädern 106, die drehbar an einem Planetenradträger 108 gelagert sind. Beim dargestellten Ausführungsbeispiel trägt dieser Planetenradträger 108 acht gleichmäßig am Umgang verteilte Planetenräder 106. Die Planetenräder 106 werden von einem Hohlrad 110 umgriffen, dessen Innenverzahnung ebenfalls mit den Planetenrädern 106 kämmt.

Figur 13 zeigt eine Einzeldarstellung der antriebsseitigen Getriebewelle 96. Demgemäß ist diese mit dem Sonnenrad 104 der antriebsseitigen Planetengetriebeeinheit 70 ausgeführt. Der in Figur 13 rechts angeordnete radial zurückgesetzte Endabschnitt taucht, wie im Folgenden noch näher erläutert wird, in das antriebsseitige Hohlrad 110 ein, das bei dem in Figur 9 dargestellten Ausführungsbeispiel drehfest mit dem abtriebsseitigen Sonnenrad 112 verbunden ist. In der Darstellung gemäß Figur 13 links vom Sonnenrad 104 ist ein Antriebsritzel 100 ausgebildet, das mit der Innenverzahnung 94 des Rotorgehäuses 76 kämmt. Gemäß der Darstellung in Figur 13 hat das Sonnenrad 104 einen größeren Durchmesser als das Antriebsritzel 100. Der links vom Antriebsritzel 100 angeordnete abgestufte Endabschnitt der antriebsseitigen Getriebewelle 100 ist - wie erläutert - im Lagerschild 64 (siehe Figur 11) gelagert.

Gemäß der Darstellung in Figur 9 kämmt das antriebsseitige Sonnenrad 104 mit den Planetenrädern 106, die drehbar im Planetenradträger 108 gelagert sind. Dieser besteht im Prinzip aus zwei Stirnplatten 114, 116, die über die Rotationsachsen der Planetenräder 106 miteinander verbunden sind und zwischen denen die Planetenräder 106 angeordnet sind. Wie beschrieben, kämmen die Planetenräder 106 der antriebsseitigen Planetengetriebeeinheit 70 mit dem Hohlrad 110, das bei der Variante gemäß Figur 9 tassenförmig ausgebildet ist und drehfest mit der abtriebsseitigen Getriebewelle 100 verbunden ist. Demzufolge sind das Sonnenrad 112 der abtriebsseitigen Planetengetriebeeinheit 72 und das Hohlrad 110 der antriebsseitigen Planetengetriebeeinheit drehfest miteinander verbunden.

Wie erläutert, kämmt auch das Sonnenrad 112 der abtriebsseitigen Planetengetriebeeinheit 72 mit einer Vielzahl von Planetenrädern 118, die ihrerseits in einem Planetenradträger 120 aufgenommen sind, der mit zwei Stirnplatten 122, 124 ausgeführt ist, die die Rotationsachsen der Planetenräder 118 tragen. Gemäß Figur 9 ist der Endabschnitt der abtriebsseitigen Getriebewelle 100 über ein Wälzlager 126 in einem Aufnahmeraum der Stirnplatte 124 gelagert. Entsprechende Wälzlager sind auch vorgesehen, um die anderen Stirnplatten 122, 114, 116 auf der jeweiligen Getriebewelle 96, 100 zu lagern. Die Abtriebswelle 74 ist mit der Stirnplatte 124 verschraubt.

Ein Hohlrad 128 der abtriebsseitigen Planetengetriebeeinheit 72 ist an der Innenumfangswandung eines Planetengehäuses 130 gelagert, das stirnseitig mit dem abtriebsseitigen Lagerschild 62 verbunden ist.

Das Planetengehäuse 130 kann mit einer Innenverzahnung oder dergleichen versehen sein, die mit einer entsprechenden Verzahnung des Hohlrads 128 kämmt, sodass diese beiden Bauelemente drehfest miteinander verbunden sind. Prinzipiell kann das Hohlrad 128 auch als Innenverzahnung am Planetengehäuse 130 ausgebildet werden.

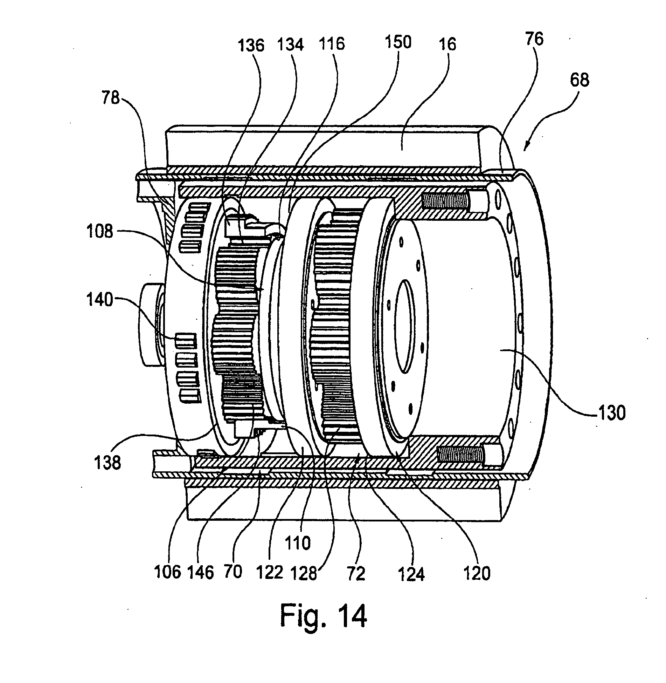

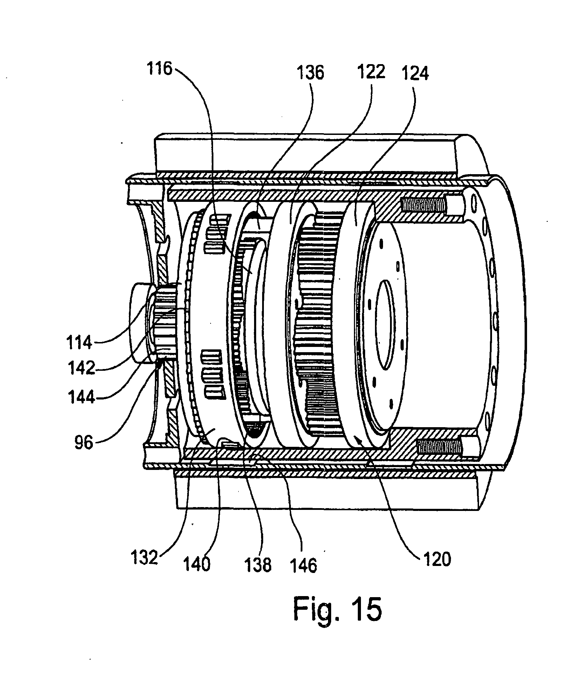

Gemäß Figur 9 ist am Außenumfang der Stirnplatte 114 des Planetenradträgers 108 eine Außenverzahnung ausgebildet, die mit einer Innenverzahnung eines Schaltrings 132 kämmt, der seinerseits wiederum mit einer Außenverzahnung ausgeführt ist, die je nach Schiebeposition des Schaltrings 82 mit einer entsprechenden Innenverzahnung des Planetengehäuses 130 in Eingriff bringbar ist. Die Innenverzahnung des Schaltrings 132 ist in einer Schiebeposition auch mit einer Außenverzahnung des Hohlrads 110 der antriebsseitigen Planetengetriebeeinheit 70 in Eingriff, wobei dann allerdings der Eingriff der Außenverzahnung des Schaltrings 132 mit der entsprechenden Innenverzahnung des Planetengehäuses 130 gelöst ist. Dies wird anhand der Figuren 14 und 15 erläutert, die eine dreidimensionale aufgebrochene Darstellung des Planetengetriebes 68 zeigen. Man erkennt das Rotorgehäuse 76 des Rotors 16 mit dem Boden 78. Das Planetengehäuse 130 taucht mit einem vorbestimmten Radialspalt in das Rotorgehäuse 76 ein. In diesem ist die abtriebsseitige Planetengetriebeeinheit 72 gelagert, wobei in der Darstellung gemäß Figuren 14 und 15 das Hohlrad 128 weggelassen ist oder durch das Planetengehäuse 130 ausgebildet ist. Gut sichtbar sind die beiden Stirnplatten 122, 124 des Planetenradträgers 120, der die Planetenräder 128 trägt, die ihrerseits mit dem in den Figuren 14 und 15 nicht sichtbaren Hohlrad 128 kämmen. Koaxial zur abtriebsseitigen Planetenradeinheit 72 angeordnet ist die antriebsseitige Planetenradeinheit 70 mit den Stirnplatten 114 (Figur 15) und 116 des Planetenradträgers 108 sowie die daran gelagerten Planetenräder 106, die ihrerseits mit einer Innenverzahnung 134 des Hohlrads 110 kämmen. Dieses hat die bereits erwähnte Außenverzahnung 136, die in Eingriff mit der Innenverzahnung 138 des Schaltrings 132 bringbar ist. Dessen Außenverzahnung 140 ist je nach Schiebeposition des Schaltrings 132 in Eingriff bringbar mit einer entsprechenden Innenverzahnung 150 des Planetengehäuses 130. Gemäß Figur 15 hat die Stirnplatte 114 eine Außenverzahnung 142, die in einer Schiebeposition des Schaltrings in Eingriff mit dessen Innenverzahnung 138 bringbar ist. In Figur 15 gut sichtbar ist auch ein auf die antriebsseitige Getriebewelle 96 aufgesetztes oder mit in dieser einstückig ausgebildetes Zahnrad 144, das in drehfesten Eingriff mit der Innenverzahnung 94 des Bodens 78 des Rotorgehäuses 76 steht.

Der Schaltring 132 kann über einen entsprechenden Aktor elektrisch, mechanisch oder hydraulisch verstellt werden, wobei dieser in Achsrichtung innerhalb des Planetengehäuses 130 verstellbar ist. Die Figuren 9 und 14 zeigen eine erste Schaltposition des Schaltrings 132, in der dieser sowohl mit dem Planetenradträger 106 als auch mit dem Planetengehäuse 130 in Eingriff steht, sodass der Planetenradträger 108 still steht. Die aufgrund des Verzahnungseingriffs mit dem Rotor 76 drehende antriebsseitige Getriebewelle 96 treibt somit das Sonnenrad 104 an, sodass die Planetenräder 106 im stillstehenden Planetenradträger 108 rotieren und ihrerseits das Hohlrad 110 antreiben. Dieses ist - wie eingangs erläutert - drehfest mit der Getriebewelle 100 der abtriebsseitigen Planetengetriebeeinheit 72 verbunden, die mit einem unveränderlichen Übersetzungsverhältnis ausgeführt ist, sodass entsprechend dieses Übersetzungsverhältnisses die Antriebswelle 74 angetrieben wird.

Bei Verstellung des Schaltrings 132 in die in Figur 15 dargestellte Relativposition wird die drehfeste Verbindung zwischen der Außenverzahnung 140 des Schaltrings 132 und dem Planetengehäuse 130 aufgehoben, sodass der Planetenradträger 108 vom Planetengehäuse 130 entkoppelt ist. Dabei taucht die Außenverzahnung 140 gemäß Figur 15 in eine umlaufende Ringnut 146 an der Innenumfangswandung des Planetengehäuses 130 ein. Die Innenverzahnung 138 des Schaltrings 132 greift dann sowohl in die Außenverzahnung 136 des Hohlrads 110 als auch in die Außenverzahnung des Planetenradträgers 108 ein, sodass diese beiden Bauelemente drehfest miteinander verbunden sind - dementsprechend stellt sich ein höheres Übersetzungsverhältnis als in der ersten Schaltposition ein.

In einer dritten Schaltposition wird der Schaltring 132 aus der Position gemäß Figur 15 noch weiter nach rechts verschoben, sodass er mit seiner Außenverzahnung 140 wieder in Eingriff mit der Innenverzahnung 150 des Planetengehäuses 130 gelangt. Der drehfeste Eingriff zwischen dem Schaltring 132 und dem Hohlrad 110 sowie dem Planetenradträger 108 der antriebsseitigen Planetengetriebeeinheit 70 wird dabei aufgehoben, sodass sich ein noch kleineres Übersetzungsverhältnis I als bei der Schaltposition gemäß Figur 15 einstellt.

Das vorbeschriebene Ausführungsbeispiel gemäß den Figuren 8 bis 15 zeichnet sich zum einen durch einen äußerst kompakten Aufbau und zum anderen durch eine hohe Stabilität mit großem einstellbarem Übersetzungsverhältnis aus, sodass auch große Antriebsleistungen und Drehmomente übertragbar sind. Das kompakte Antriebsmodul 6 kann mit geringem Gewicht und platzsparend ausgeführt werden, sodass eine Montage im Bereich des Radträgers jedes Rades ohne Probleme möglich ist.

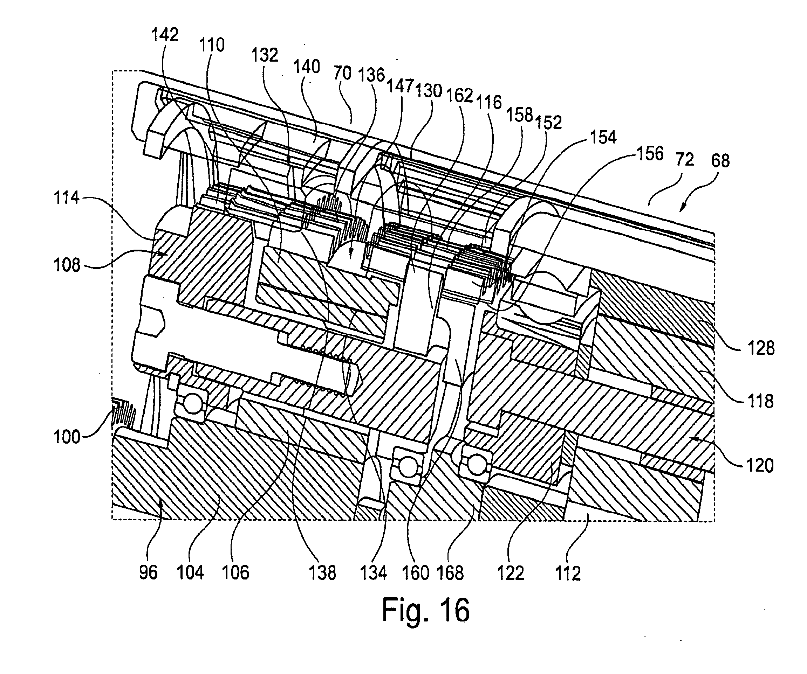

Anhand der Figuren 16 bis 21 wird ein weiteres Ausführungsbeispiel eines Antriebssystems mit einem modifizierten Planetengetriebe erläutert.

Figur 16 zeigt eine stark schematisierte dreidimensionale Darstellung eines Teils des Planetengetriebes 68, dessen Grundaufbau ähnlich demjenigen des Ausführungsbeispiels gemäß Figur 9 ist. In der Teildarstellung gemäß Figur 16 erkennt man die antriebsseitige Getriebewelle 96 mit dem antriebsseitigen Sonnenrad 104 und einem Teil des Antriebsritzels 100. Wie beim zuvor beschriebenen Ausführungsbeispiel kämmt das Sonnenrad 104 mit den antriebsseitigen Planetenrädern 106, die am Planetenradträger 108 gehalten sind. Diese kämmen ihrerseits mit dem Hohlrad 110 der ersten Planetengetriebe 70. Im Unterschied zum zuvor beschriebenen Ausführungsbeispiel ist das Hohlrad 110 nicht einstückig mit dem Antrieb des abtriebsseitigen Sonnenrades 112 der abtriebsseitigen Planetengetriebeeinheit 72 ausgeführt. Beim dargestellten Ausführungsbeispiel ist das Hohlrad 110 ringförmig ausgebildet und in den in Axialrichtung von den Stirnplatten 114, 116 des Planetenradträgers 108 begrenzten Raum eingesetzt.

Wie erläutert, hat das Hohlrad 110 eine Außenverzahnung 136 und eine mit den Planetenrädern 106 kämmende Innenverzahnung 134. Auch die Stirnplatte 114 ist mit einer Außenverzahnung 142 ausgeführt, wobei diese und die entsprechende Außenverzahnung 136 des Hohlrads 110 je nach Schiebeposition des Schaltrings 132 mit dessen Innenverzahnung 138 kämmt. Am Außenumfang des Schaltrings 132 ist, ähnlich wie beim zuvor beschriebenen Ausführungsbeispiel, eine Außenverzahnung 140 vorgesehen, die je nach Schiebeposition des Schaltrings 132 im Eingriff mit dem Planetengehäuse 130 bringbar ist oder gegenüber diesem verdreht werden kann. Figur 16 zeigt dabei das Planetengetriebe 68 in einer Schaltposition, die dem dritten Gang entspricht. Dieser wird im Folgenden näher erläutert. In Figur 16 sichtbar ist auch die linke Stirnplatte 122 des abtriebsseitigen Planetenradträgers 120, der eine Vielzahl von Planetenrädern 118 trägt, die mit dem abtriebsseitigen Hohlrad 128 der zweiten Planetengetriebeeinheit 72 kämmen. Bei dem Ausführungsbeispiel gemäß den Figuren 16 bis 21 ist ein zweiter Schaltring 152 vorgesehen, über den beispielsweise die Stirnplatte 116 des antriebsseitigen Planetenradträgers 108 mit einem Ritzelabschnitt 160 einer abtriebsseitigen Getriebewelle 168 des abtriebsseitigen Planetenradträgers 120 verbindbar ist. Hierzu ist der Ritzelabschnitt 160 mit einer Außenverzahnung 154 versehen, die mit einer entsprechenden Innenverzahnung 156 des zweiten Schaltrings 152 kämmen kann. Die Stirnplatte 116 des antriebsseitigen Planetenradträgers 108 ist ebenfalls mit einer Außenverzahnung 158 ausgeführt. Zahnteilung und Zahngeometrie der Außenverzahnungen 136, 158, 154 des Hohlrads 110, der Stirnplatte 116 bzw. des Ritzelabschnitts 160 sind identisch ausgeführt.

In der dem dritten Gang entsprechenden Darstellung gemäß Figur 16 verbindet der zweite Schaltring 152 das Hohlrad 110 mit dem drehfest mit dem Sonnenrad 112 verbundenen Ritzelabschnitt 160, sodass das Sonnenrad 112 und das Hohlrad 110-ähnlich wie beim zuvor beschriebenen Ausführungsbeispiel - drehfest miteinander verbunden sind.

Die Außenverzahnung 158 der Stirnplatte 116 steht dabei außer Eingriff mit dem zweiten Schaltring 152, da die Außenverzahnung 158 mit Bezug zu einer Innennut 162 des zweiten Schaltrings 152 ausgerichtet ist und somit nicht drehfest mit diesem verbunden ist.

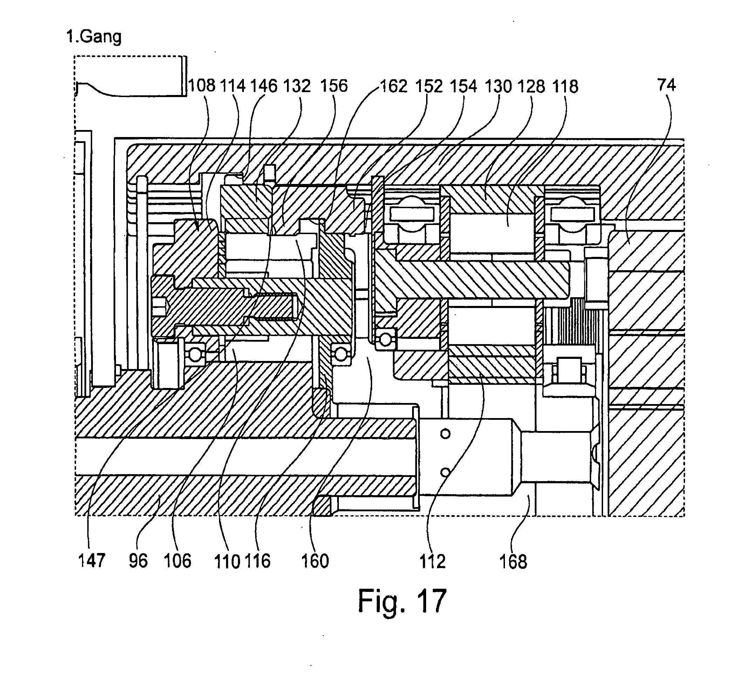

Figur 17 zeigt in stark schematisierter Darstellung die Relativposition der vorbeschriebenen Bauelemente im ersten Gang. Der erste Schaltring 132 ist dabei in eine Position verschoben, in der er einerseits drehfest mit dem Hohlrad 110 und andererseits drehfest mit der Innenverzahnung des Planetengehäuses 130 verbunden ist. Über den zweiten Schaltring 152 ist der Planetenradträger 108 oder, genauer gesagt, die Stirnplatte 116 dieses Planetenradträgers 108 drehfest mit dem Ritzelabschnitt 160 verbunden, der seinerseits über eine abtriebsseitige, in etwa topfförmig ausgebildete Getriebewelle 168 mit dem Sonnenrad 112 verbunden ist. Ein Eingriff des zweiten Schaltrings 152 mit dem Hohlrad 110 liegt nicht vor, da ein Teil der Außenverzahnung des Hohlrads 110 in der Innennut 162 läuft und ein Teil der Innenverzahnung 156 des zweiten Schaltrings 152 mit Bezug zu einer Nut 147 des Hohlrads 110 ausgerichtet ist. Im ersten Gang drehen somit der Planetenradträger 108 und das Sonnenrad 112 mit der gleichen Drehzahl, während das Hohlrad 110 drehfest mit dem Planetengehäuse 130 verbunden ist.

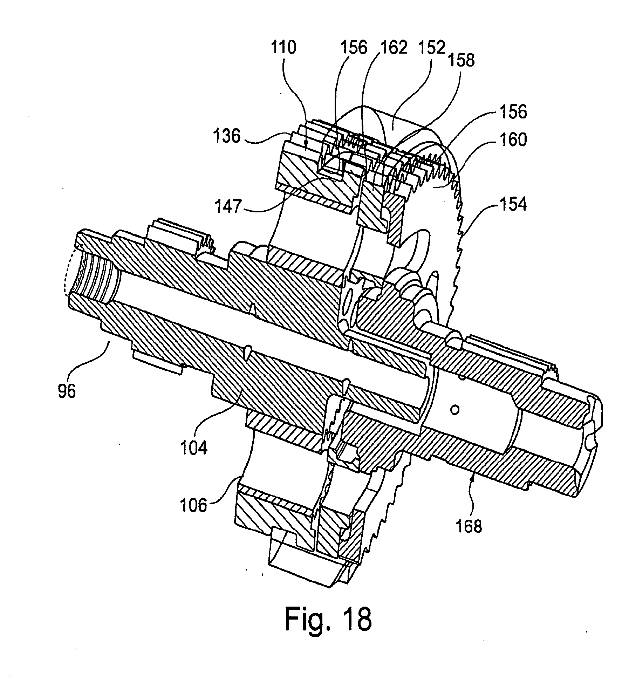

Die Position des Schaltrings 152 in dem vorbeschriebenen ersten Gang ist in Figur 18 verdeutlicht, in der nur diejenigen Bauteile ausgeführt sind, die mit dem zweiten Schaltring 152 in Wirkverbindung stehen. Man erkennt, dass das Hohlrad 110 und der zweite Schaltring 152 so zueinander ausgerichtet sind, dass kein Eingriff vorliegt, wobei ein Teil der Innenverzahnung 156 des zweiten Schaltrings 152 mit Bezug zur Nut 147 des Hohlrads 110 ausgerichtet ist und andererseits ein Teil der Außenverzahnung 136 des Hohlrads 110 mit Bezug zur Innennut 162 ausgerichtet ist. Die Innenverzahnung 156 kämmt in dieser Position (erster Gang) mit den Außenverzahnungen 158, 154 der Stirnplatte 116 bzw. des Ritzelabschnitts 160.

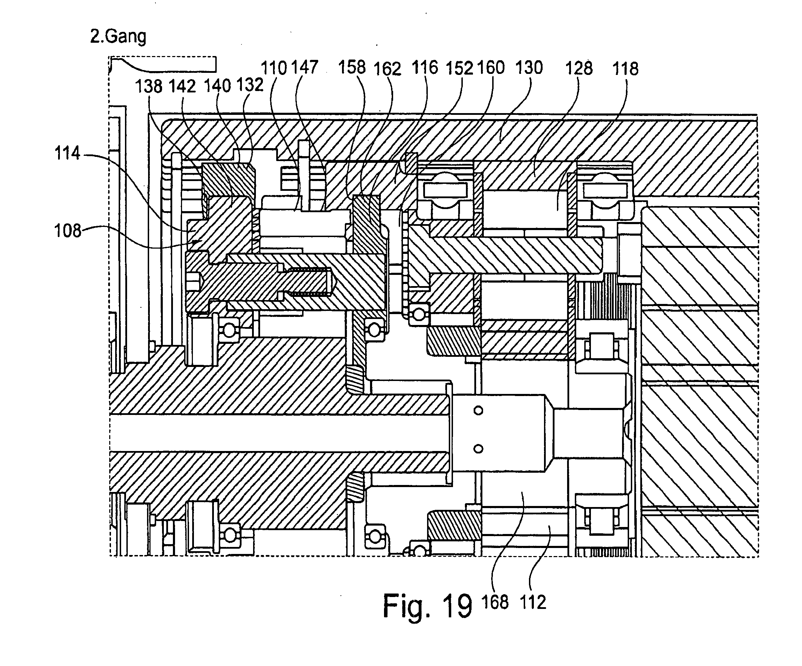

Figur 19 zeigt die Positionen der Schaltringe 132, 152 im zweiten Gang. Der erste Schaltring 132 ist gegenüber der Position in den Figuren 17 und 18 nach links verschoben, sodass er mit seiner Innenverzahnung 138 in Wirkeingriff mit der Außenverzahnung 142 der Stirnplatte 114 des antriebsseitigen Planetenradträgers 108 steht. Die Außenverzahnung 140 des ersten Schaltrings 132 steht dabei in Eingriff mit der Innenverzahnung des Planetengehäuses 130, sodass dementsprechend der Planetenradträger 108 drehfest mit dem Planetengehäuse 130 verbunden ist.

Der zweite Schaltring 152 ist gegenüber der Position in den Figuren 17 und 18 nach rechts verschoben, wobei die Außenverzahnung 158 der Stirnplatte 116 mit Bezug zur Innennut 162 ausgerichtet ist, sodass diese nicht mit dem zweiten Schaltring 152 verbunden ist. Dieser verbindet allerdings das Hohlrad 110 drehfest mit dem Ritzelabschnitt 160 der abtriebsseitigen Getriebewelle 168. Demzufolge ist im zweiten Gang der Planetenradträger 108 drehfest mit dem Planetengehäuse 130 verbunden, während über den Schaltring das Hohlrad 110 drehfest mit der abtriebsseitigen Getriebewelle 168 und damit mit dem Sonnenrad 112 verbunden ist.

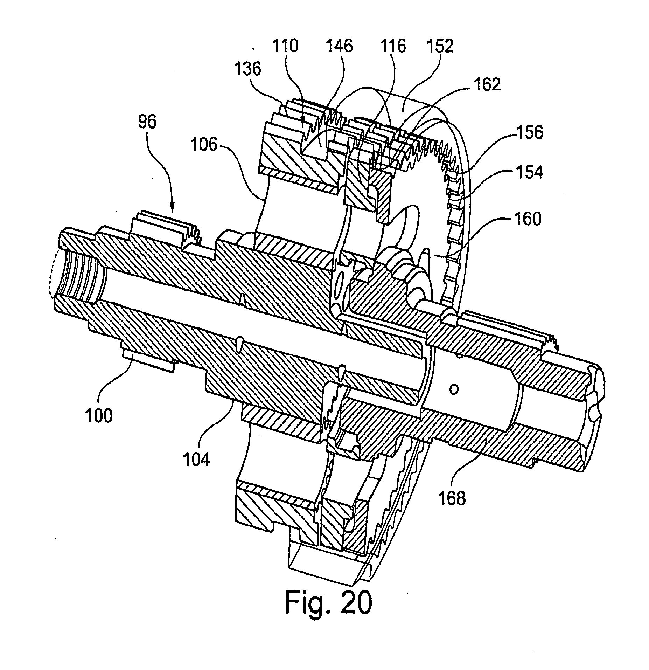

Figur 20 zeigt nur diejenigen Teile des Planetengetriebes 68, die mit dem zweiten Schaltring 152 in Eingriff stehen. Aus dieser Ansicht erschließt sich auch, dass der Außenumfang dieses Schaltrings 152 in keiner der Schaltpositionen in Verzahnungseingriff mit der Innenverzahnung des Planetengehäuses 130 gelangt, da keine Außenverzahnung vorgesehen ist

In der Darstellung gemäß Figur 20 erkennt man deutlich, dass der zweite Schaltring 152 mit der Außenverzahnung 136 des Hohlrads 110 und mit der Außenverzahnung 154 des Ritzelabschnitts 160 der abtriebsseitigen Getriebewelle 168 steht und die Stirnplatte 116 ohne Verzahnungseingriff in die Innennut 162 eintaucht.

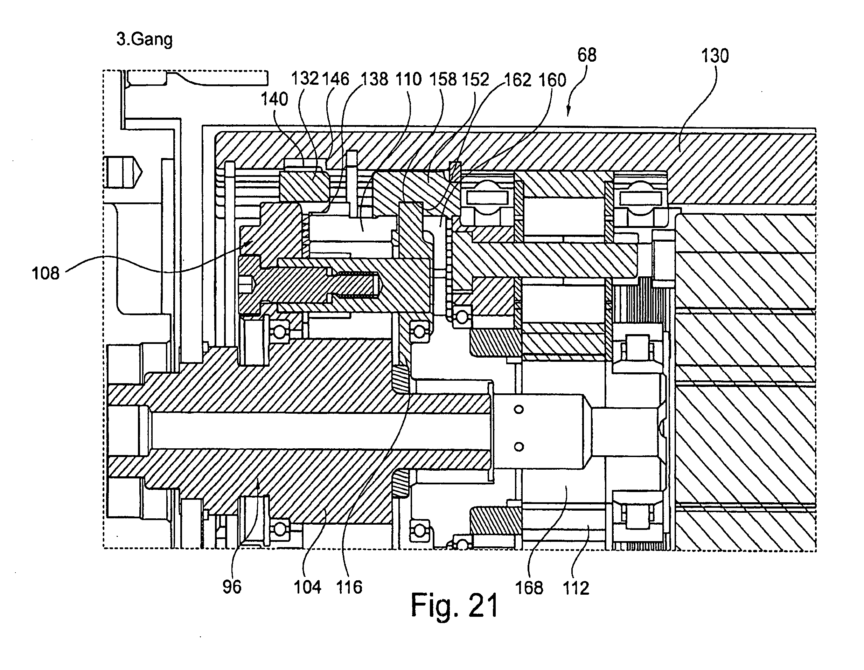

Figur 21 zeigt schließlich das Planetengetriebe 38 im dritten Gang. Dabei ist der erste Schaltring 132 mit seiner Außenverzahnung 140 mit Bezug zur umlaufenden Ringnut 146 des Planetengehäuses 130 ausgerichtet und verbindet mit seiner Innenverzahnung 138 den Planetenradträger 108 mit dem Hohlrad 110, sodass diese mit gleicher Drehzahl rotieren. Der zweite Schaltring 152 verbindet das Hohlrad 110 mit dem Ritzelabschnitt 160 der abtriebsseitigen Getriebewelle 168, sodass das Sonnenrad 112 und das Hohlrad 110 drehfest miteinander verbunden sind. Die Stirnplatte 116 des Planetenradträgers 108 ist dabei mit ihrer Außenverzahnung 158 fluchtend zur Nut 162 ausgerichtet, sodass zwischen diesen Bauelementen kein Eingriff besteht.

Bei dem zuvor beschriebenen Planetengetriebe 68 sind drei Gänge vorgesehen. In vielen Anwendungsfällen dürfte jedoch auch ein Getriebe, beispielsweise ein Planetengetriebe mit zwei Gängen ausreichend sein, sodass der konstruktive und vorrichtungstechnische Aufwand gegenüber einem Getriebe mit drei Gängen deutlich verringert werden kann. Die Anmelderin behält sich vor, auf den Aufbau der beschriebenen Planetengetriebe oder Zykloidgetriebe einen eigenen, vom Antriebssystem unabhängigen Anspruch zu richten.

Aufgrund des modularen Aufbaus und der Positionierung der Antriebe direkt im Bereich der Räder ist eine optimale Gewichtsverteilung im Fahrzeug gewährleistet. Darüber hinaus ist dadurch auch die Kraftübertragung zwischen Fahrzeug und Untergrund stets optimal, da zum Einen ein sehr tiefer, radkonzentrierter Schwerpunkt ermöglichst ist und zum Anderen die Traktion in die Berechnung der vorgegebenen Bahnkurve eingeht.

Die Anmelderin behält sich vor, auf den Aufbau der Steuereinheit mit dem Motioncontroller und den Servocontrollern (unabhängig von der Anzahl der Räder und des konkreten Aufbaus des Antriebsmoduls) einen eigenen, unabhängigen Patentanspruch zu richten.

Offenbart ist ein Antriebssystem für ein Fahrzeug mit einem Antriebsmodul, der einen Generator und einen Motor aufweist, die auf einer gemeinsamen Achse angeordnet sind. Generator und Motor ist ein ebenfalls auf dieser Achse liegendes Getriebe zugeordnet. Offenbart ist des Weiteren eine Steuereinheit für ein derartiges Antriebssystem mit einem mehreren Rädern zugeordnetem Motioncontroller und jeweils einem Rad zugeordneten Servocontrollern.

### Bezugszeichenliste:

- 1: Fahrzeug
- 2: Bodengruppe
- 4: Rad
- 6: Antriebsmodul
- 8: Akkumulator
- 10: Tunnel
- 11: Steuereinheit
- 12: High-Torque-Motor
- 14: Welle
- 16: Rotor
- 18: Stator
- 20: Generator Rotor
- 22: Generator Stator
- 24: Generator
- 26: Gehäuse
- 28: Lager
- 30: Gelenkwelle
- 32: Zykloidgetriebe
- 34: Zylkloidenscheibe
- 36: Abtriebsflansch
- 38: Abtriebslager
- 40: Aufnahme
- 42: Motioncontroller
- 44: Servocontroller
- 46: Sicherheitsbremse
- 48: Positionsgeber
- 50: Fahrzeugcontroller
- 52: Batteriemanagement
- 54: Safetycontroller
- 56: Stator-Gehäuse
- 58: Befestigungsflansch
- 60: Konsole
- 62: Lagerschild
- 64: Lagerschild
- 66: Kühlmittelanschluss
- 68: Planetengetriebe
- 70: Planetengetriebeeinheit
- 72: Planetengetriebeeinheit
- 74: Abtriebswelle
- 76: Rotorgehäuse
- 78: Boden
- 80: Kühlmittelpumpe
- 82: Flügel
- 84: Hubring
- 86.: Pumpenrotor
- 88: Druckraum
- 90: Einlasskanal
- 92: Kühlmittelkanal
- 94: Innenverzahnung
- 96: Getriebewelle
- 98: Wellenlager
- 100: Antriebsritzel
- 102: Wellenlager
- 104: Sonnenrad
- 106: Planetenrad
- 108: Planetenradträger
- 110: Hohlrad
- 112: Sonnenrad
- 114: Stirnplatte
- 116: Stirnplatte
- 118: Planetenrad
- 120: Planetenradträger
- 122: Stirnplatte
- 124: Stirnplatte
- 126: Wälzlager
- 128: Hohlrad
- 130: Planetengehäuse
- 132: Schaltring
- 134: Innenverzahnung
- 136: Außenverzahnung
- 138: Innenverzahnung
- 140: Außenverzahnung
- 142: Außenverzahnung
- 144: Zahnrad
- 146: Ringnut
- 147: Nut
- 150: Innenverzahnung
- 152: 2. Schaltring
- 154: Außenverzahnung
- 156: Innenverzahnung
- 158: Außenverzahnung
- 160: Ritzelabschnitt
- 162: Innennut
- 168: Getriebewelle

## Patentansprüche

1. Antriebssystem eines Elektrofahrzeugs mit einem zumindest einem Rad (4) zugeordneten Antriebsmodul (6), das im motorischen Betrieb und im generatorischen Betrieb betreibbar ist, wobei ein Antriebsmotor (12) und ein Generator (24) koaxial angeordnet sind, und mit einem Getriebe, dessen Abtriebswelle das Rad (4) antreibt, **dadurch gekennzeichnet, dass** Getriebe und Motor (12) sowie Generator (24) im Wesentlichen koaxial angeordnet sind, wobei der Stator 18, 22 und der Rotor (16, 20) das Getriebe zumindest abschnittsweise umgreifen.

2. Antriebssystem nach Patentanspruch 1, wobei der Generator (24) und der Motor (12) zumindest einen Rotor (16, 20) und jeweils einen Stator (18, 22) haben, die koaxial zueinander angeordnet sind.

3. Antriebssystem nach Patentanspruch 1 oder 2, wobei eine Generatorwicklung hochohmig und eine Motorwicklung niederohmig ausgebildet ist.

4. Antriebssystem nach einem der Patentansprüche 1 bis 3, wobei der Stator (18, 22) ein Gehäuse bildet, in dem der Rotor (16, 20) aufgenommen ist, der seinerseits das Getriebe umgreift.

5. Antriebssystem nach einem der vorhergehenden Patentansprüche, wobei das Getriebe ein Zykloidgetriebe (32) oder ein Planetengetriebe ist.

6. Antriebssystem nach Patentanspruch 5, mit zwei Planetengetriebeeinheiten (70, 72), die mit einander in Wirkverbindung stehen und von denen zumindest eines mit einem variablen Übersetzungsverhältnis (I) ausgeführt ist.

7. Antriebssystem nach Patentanspruch 6, wobei ein Sonnenrad (112) einer Planetengetriebeeinheit (72) mit einem Planetenradträger (108) der anderen Planetengetriebeeinheit (70) verbunden ist.

8. Antriebssystem nach Patentanspruch 6 oder 7, wobei eine Abtriebswelle (74) mit dem Planetenradträger (120) der abtriebsseitigen Planetengetriebeeinheit (72) verbunden ist.

9. Antriebssystem nach einem der Patentansprüche 6 bis 8, wobei zumindest ein Schaltring (132, 152) in einem Planetengehäuse (130) verschiebbar geführt ist und je nach Schiebeposition einen Planetenradträger (108) einer Planetengetriebeeinheit (70) und ein Planetengehäuse (130) oder ein Hohlrad (110) der Planetengetriebeeinheit (70) und einen Planetenradträger (108) einer anderen Planetengetriebeeinheit (72) oder ein Hohlrad (110) der Planetengetriebeeinheit (70) mit dem Planetengehäuse (130) oder den Planetenradträger (108) mit dem Hohlrad (110) oder dieses mit einem Sonnenrad (112) der weiteren Planetengetriebeeinheit (72) verbindet, wobei bei Verwendung von zwei Schaltringen (132, 152) diese so ausgebildet sind, dass jeweils eines der vorgenannten Bauelemente in Wirkeingriff mit einem der Schaltringe (132, 152) gelangt.

10. Antriebssystem nach einem der vorhergehenden Patentansprüche, wobei das Antriebsmodul (6) einen Positionsgeber (48) zur Erfassung der Winkelposition eines Rads (6) oder eines Rotors (16, 120) hat.

11. Antriebssystem nach einem der vorhergehenden Patentansprüche, wobei jedem Rad (4) ein Antriebsmodul (6) zugeordnet ist, das über einen gemeinsamen Motioncontroller (42) angesteuert ist.

12. Antriebssystem nach einem der vorhergehenden Patentansprüche, mit einer Steuereinheit, die einen Motioncontroller (42) zur Vorgabe einer Stellgröße für einen Servocontroller (44) des Antriebsmoduls (6) hat.

13. Antriebssystem nach Patentanspruch 8, wobei der Motioncontroller (42) mehrere Fuzzyrechner zur Berechnung von Stellgrößen (Traktion, Radanordnung, Drehzahlkorrektur, Power für Motor/Generator) für den Servocontroller (44) in Abhängigkeit von Leitgrößen (Lenkradeinschlag, Geschwindigkeit) hat.

14. Antriebssystem nach Patentanspruch 9, mit Sensoren zur Erfassung der Fahrzeugneigung, der Geschwindigkeitsvorgabe und des Lenkradeinschlags, wobei bei Überschreiten einer vorgegebenen Neigung (Bergabfahrt) auf generatorischen Betrieb umgeschaltet wird.

15. Antriebssystem nach einem der vorhergehenden Patentansprüche, wobei Motor (12) und Generator (24) wassergekühlt sind und wobei vorzugsweise eine Kühlmittelpumpe (80) vom Rotor (16, 20) angetrieben ist, wobei diese Kühlmittelpumpe vorzugsweise eine Flügelzellenpumpe ist.

## Claims

1. Drive system of an electric vehicle having a drive module (6) which is associated with at least one wheel (4) and which can be operated in motor operation and in regenerative operation, a drive motor (12) and a generator (24) being arranged coaxially, and having a gear mechanism whose output shaft drives the wheel (4), **characterised in that** the gear mechanism and motor (12) and generator (24) are arranged substantially coaxially, the stator (18, 22) and the rotor (16, 20) at least partially engaging around the gear mechanism.

2. Drive system according to patent claim 1, wherein the generator (24) and the motor (12) have at least one rotor (16, 20) and one stator (18, 22) which are arranged coaxially with respect to each other, respectively.

3. Drive system according to patent claim 1 or 2, wherein a generator winding is constructed so as to be high-resistance and a motor winding is constructed so as to be low-resistance.

4. Drive system according to any one of patent claims 1 to 3, wherein the stator (18, 22) forms a housing in which the rotor (16, 20) is received and which itself engages around the gear mechanism.

5. Drive system according to any one of the preceding patent claims, wherein the gear mechanism is a cycloidal gear (32) or a planetary gear.

6. Drive system according to patent claim 5, having two planetary gear units (70, 72) which are operationally connected to each other and of which at least one is constructed with a variable transmission ratio (I).

7. Drive system according to patent claim 6, wherein a sun wheel (112) of a planetary gear unit (72) is connected to a planet wheel carrier (108) of the other planetary gear unit (70).

8. Drive system according to patent claim 6 or 7, wherein an output shaft (74) is connected to the planet wheel carrier (120) of the output-side planetary gear unit (72).

9. Drive system according to any one of patent claims 6 to 8, wherein at least one shifting ring (132, 152) is displaceably guided in a planet housing (130) and, depending on the pushing position, connects a planet wheel carrier (108) of a planetary gear unit (70) and a planet housing (130) or an internal-toothed gear (110) of the planetary gear unit (70) and a planet wheel carrier (108) of another planetary gear unit (72) or an internal-toothed gear (110) of the planetary gear unit (70) to the planet housing (130) or the planet wheel carrier (108) to the internal-toothed gear (110) or connects the internal-toothed gear to a sun wheel (112) of the additional planetary gear unit (72), wherein, when two shifting rings (132, 152) are used, they are constructed in such a manner that one of the above-mentioned structural elements moves into operational engagement with one of the shifting rings (132, 152).

10. Drive system according to any one of the preceding patent claims, wherein the drive module (6) has a position sensor (48) for detecting the angular position of a wheel (6) or a rotor (16, 120).

11. Drive system according to any one of the preceding patent claims, wherein there is associated with each wheel (4) a drive module (6) which is controlled by means of a common motion controller (42).

12. Drive system according to any one of the preceding patent claims, having a control unit which has a motion controller (42) for specifying an actuation variable for a servo controller (44) of the drive module (6).

13. Drive system according to patent claim 8, wherein the motion controller (42) has a plurality of fuzzy processors for calculating actuation variables (traction, wheel arrangement, speed correction, power for motor/generator) for the servo controller (44) in accordance with command variables (steering wheel angle, speed).

14. Drive system according to patent claim 9, having sensors for detecting the vehicle inclination, the speed specification, and the steering wheel angle, with a change being made to regenerative operation when a predetermined inclination (downhill travel) is exceeded.

15. Drive system according to any one of the preceding patent claims, wherein the motor (12) and generator (24) are water cooled and wherein a cooling medium pump (80) is preferably driven by the rotor (16, 20), this cooling medium pump preferably being a vane pump.

## Revendications

1. Système d'entraînement d'un véhicule électrique comprenant un module d'entraînement (6) associé à au moins une roue (4), lequel peut fonctionner dans un mode moteur et dans un mode générateur, sachant qu'un moteur d'entraînement (12) et un générateur (24) sont disposés de manière coaxiale, et comprenant une boîte de vitesses, dont l'arbre de sortie entraîne la roue (4), **caractérisé en ce que** la boîte de vitesses et le moteur (12) ainsi que le générateur (24) sont disposés essentiellement de manière coaxiale, sachant que le stator (18, 22) et le rotor (16, 20) entourent au moins par endroits la boîte de vitesses.

2. Système d'entraînement selon la revendication 1, sachant que le générateur (24) et le moteur (12) ont au moins un rotor (16, 20) et respectivement un stator (18, 22), lesquels sont disposés de manière coaxiale l'un par rapport à l'autre.

3. Système d'entraînement selon la revendication 1 ou 2, sachant qu'un enroulement de générateur est réalisé de manière à présenter une impédance élevée et qu'un enroulement de moteur est réalisé de manière à présenter une faible impédance.

4. Système d'entraînement selon l'une quelconque des revendications 1 à 3, sachant que le stator (18, 22) forme un boîtier, dans lequel le rotor (16, 20) est logé, lequel entoure pour sa part la boîte de vitesses.

5. Système d'entraînement selon l'une quelconque des revendications précédentes, sachant que la boîte de vitesses est une boîte de vitesses à engrenages cycloïdaux (32) ou une boîte de vitesses à engrenages planétaires.

6. Système d'entraînement selon la revendication 5, comprenant deux unités de boîte de vitesses à engrenages planétaires (70, 72), qui se trouvent en liaison fonctionnelle l'une avec l'autre et dont au moins une est réalisée avec un rapport de démultiplication (I) variable.

7. Système d'entraînement selon la revendication 6, sachant qu'une roue solaire (112) d'une unité de boîte de vitesses à engrenages planétaires (72) est reliée à un porte-satellites (108) de l'autre unité de boîte de vitesses à engrenages planétaires (70).

8. Système d'entraînement selon la revendication 6 ou 7, sachant qu'un arbre de sortie (74) est relié au porte-satellites (120) de l'unité de boîte de vitesses à engrenages planétaires (72) côté sortie.

9. Système d'entraînement selon l'une quelconque des revendications 6 à 8, sachant qu'au moins une bague de commutation (132, 152) est guidée de manière à pouvoir être coulissée dans un boîtier planétaire (130) et, respectivement selon la position de coulissement, relie un porte-satellites (108) d'une unité boîte de vitesses à engrenages planétaires (70) et un boîtier planétaire (130) ou une couronne (110) de l'unité de boîte de vitesses à engrenages planétaires (70) et un porte-satellites (108) d'une autre unité de boîte de vitesses à engrenages planétaires (72) ou une couronne (110) de l'unité de boîte de vitesses à engrenages planétaires (70) au boîtier planétaire (130) ou le porte-satellites (108) à la couronne (100) ou celle-ci à une roue solaire (112) de l'autre unité de boîte de vitesses à engrenages planétaires (72), sachant que, en cas d'utilisation de deux bagues de commutation (132, 152), celles-ci sont réalisées de telle manière que respectivement un des composants mentionnés ci-avant parvient en prise fonctionnelle avec l'une des bagues de commutation (132, 152).

10. Système d'entraînement selon l'une quelconque des revendications précédentes, sachant que le module d'entraînement (6) a un transmetteur de position (48) servant à détecter la position angulaire d'une roue (6) ou d'un rotor (16, 120).

11. Système d'entraînement selon l'une quelconque des revendications précédentes, sachant qu'un module d'entraînement (6) est associé à chaque roue (4), lequel est commandé par l'intermédiaire d'un contrôleur de mouvement (42) commun.

12. Système d'entraînement selon l'une quelconque des revendications précédentes, comprenant une unité de commande, qui a un contrôleur de mouvement (42) servant à spécifier une grandeur de réglage pour un servocontrôleur (44) du module d'entraînement (6).

13. Système d'entraînement selon la revendication 8, sachant que le microcontrôleur (42) a plusieurs calculateurs à logique floue servant à calculer des grandeurs de réglage (traction, agencement de roue, correction de nombre de tours, puissance pour le moteur/générateur) pour le servocontrôleur (44) en fonction de grandeurs directrices (braquage de volant, vitesse).

14. Système d'entraînement selon la revendication 9, comprenant des capteurs servant à détecter l'inclinaison de véhicule, la spécification de vitesse et le braquage de volant, sachant qu'en cas de dépassement d'une inclinaison spécifiée (descente en montagne), la commutation sur le mode générateur est effectuée.

15. Système d'entraînement selon l'une quelconque des revendications précédentes, sachant que le moteur (12) et le générateur (24) sont refroidis à l'eau et sachant que de préférence une pompe de liquide de refroidissement (80) est entraînée par le rotor (16, 20), sachant que ladite pompe de liquide de refroidissement est de préférence une pompe à palettes.
